# EUROPEAN PATENT APPLICATION

(11) **EP 4 745 275 A1**
(43) Date of publication of application: **20.05.2026**
(21) Application number: 24212551.6
(22) Date of filing: 13.11.2024
(51) Int. Cl.: C25B 15/08, C25B 1/16, C25B 1/34, B01D 61/00, C22B 26/12

(54) **METHODS AND APPARATUS FOR CONTROLLING WATER BALANCE DURING LITHIUM CHLORIDE BRINE ELECTROLYSIS**

(71) Applicant: Lifthium Energy Capital, 2530 Gasperich (LU)
(72) Inventor: The designation of the inventor has not yet been filed
(74) Representative: Carpmaels & Ransford LLP

(57) **Abstract**

The invention relates to methods and apparatus for controlling water balance during lithium chloride brine electrolysis. A method is provided comprising supplying the anolyte product stream from electrolysis to a flash evaporator without mixing it with any other liquid stream between exiting the electrolyser and entering the flash evaporator, concentrating it by vacuum evaporation and recirculating the concentrated anolyte product to the electrolyser. A method is also provided comprising the use of forward osmosis prior to electrolysis in order to adjust the concentration of the initial feed brine such that it can be purified by ion exchange and then concentrated for electrolysis, in a manner that means that the entire feed brine can be prepared for electrolysis using forward osmosis, which requires very little energy input. Apparatus for performing the above processes is also provided.

## Description

### FIELD

The present invention relates to methods of controlling water balance in processes involving the electrolysis of lithium chloride brine to produce lithium hydroxide, in particular involving the use of flash evaporation to concentrate the depleted anolyte formed during electrolysis and/or the use of forward osmosis to concentrate the brine before electrolysis. The present invention also relates apparatus for performing such processes.

### BACKGROUND

There has recently been a significant increase in the interest in producing high purity, battery grade lithium hydroxide (LiOH) and lithium carbonate (Li₂CO₃) for use in lithium-ion rechargeable batteries. This has largely been due to the drive in many countries to move towards net zero carbon emissions over the next few decades, which requires increased production of electric vehicles to replace traditional, combustion engine fuelled vehicles. Additionally, there is a growing market for large-scale energy storage systems and portable electronic devices, which also contain lithium-ion batteries.

Lithium hydroxide is commonly used to make cathode materials for lithium-ion batteries. High performance batteries that have high energy density and long cycle life require high purity lithium hydroxide, which contains very low levels of impurities such as sodium, calcium or chlorides. The production of high purity lithium hydroxide and lithium carbonate from electrochemical processing of lithium chloride (LiCl) brines is known, with many such processes using natural brines such as those found under salt flats (salars) in South America as the primary lithium source. However, such brines typically contain very low concentrations of lithium (well under 1%) and need to be subjected to solar evaporation in solar evaporation ponds order to obtain a more concentrated solution of lithium chloride that can be processed into lithium hydroxide. Solar evaporation has various environmental downsides, including the fact that a lot of groundwater is lost in the process of creating the evaporation ponds, often in regions where water is already scarce.

One particular challenge in electrolytic processing of lithium chloride brines is controlling water balance in the plant. The purification processes used to remove impurities from the brine prior to electrolysis, such as ion exchange to remove divalent impurities and/or boron impurities to a low level, require the brine to be dilute in order to work efficiently. However, the brine needs to be significantly more concentrated for electrolysis. Additionally, electrolysis produces a depleted anolyte which is a dilute solution of lithium chloride. It is desirable to recover this lithium chloride in order to prevent the loss of lithium, but the depleted anolyte needs to be concentrated in order to be reused in electrolysis. It is therefore necessary to remove water at various stages of the process in order to achieve the appropriate concentration for each step, but the evaporation of water is very energy intensive due to its high heat capacity and latent heat of vaporisation. It is thus desirable to find more energy efficient ways of controlling water balance in order to reduce energy usage and contribute to the overall efficiency and cost-effectiveness of the process.

The processing of sodium brines is more established than that of lithium brines, but the processing of lithium brines presents different challenges in relation to water balance compared to processing sodium brines. This arises partly as a result of the higher solubility of lithium chloride than sodium chloride at ambient temperature: sodium chloride has a solubility of around 360 g/L at 25 °C, compared to around 843 g/L for lithium chloride at 25 °C. Whereas sodium chloride brines can be purified by processes such as precipitation and ion exchange at concentrations close to saturation, that is not the case for lithium chloride brines, since such purification methods are ineffective at high lithium chloride concentrations close to saturation. However, as mentioned above, it is necessary for lithium chloride brines to be much more concentrated for electrolysis than they are for impurity removal, and this presents a different water balance challenge compared to processing sodium brines.

Moreover, the amount of water transferred across the electrolysis membrane during electrolysis of sodium chloride brine is markedly different from the amount of water transferred during electrolysis of lithium chloride brine, which again presents a different water balance challenge to sodium chloride electrolysis due to the different concentrations of the depleted anolyte formed in each process. Moreover, in sodium chloride electrolysis processes, the depleted anolyte can straightforwardly be concentrated by adding solid salt (NaCl), whereas that is not typically an option in lithium chloride processing, meaning that in electrolytic LiCl refining the control of concentration/water balance has to be achieved by removing water rather than adding salt.

It is thus the case that water balance solutions developed for sodium chloride electrolysis cannot be directly transposed to lithium chloride electrolysis. Improved methods of controlling water balance in processes that involve electrolysis of lithium chloride brine are needed.

### SUMMARY OF THE INVENTION

The present invention relates to methods and apparatus for controlling water balance during electrolytic processing of lithium chloride brine. The methods involve the use of forward osmosis and/or flash evaporation at specific points in the process. The methods and apparatus are unified by the common inventive concept of providing more efficient means to remove water during the overall process and thus contribute to increased energy efficiency, and may be used in conjunction with one another. Alternatively, the use of the forward osmosis process described herein may enable the flash evaporation process to be dispensed with, further reducing energy consumption.

The present invention provides a method for the processing of a lithium chloride brine comprising:
a) adding a base to the brine to increase the pH of the brine and cause precipitation of divalent impurities;
b) performing at least one ion exchange process to remove at least one impurity from the brine, thereby forming a purified brine;
c) feeding the purified brine to the anolyte compartment of an electrolyser;
d) feeding a catholyte to the catholyte compartment of the electrolyser;
e) electrolysing the anolyte and catholyte in the electrolyser, thereby forming a catholyte product comprising lithium hydroxide and an anolyte product comprising a more dilute lithium chloride brine than the brine that is fed into the anolyte compartment in step (c);
f) removing the anolyte product from the electrolyser and supplying the anolyte product stream to a flash evaporator without mixing it with any other liquid stream between exiting the electrolyser and entering the flash evaporator;
g) increasing the concentration of the anolyte product stream by vacuum evaporation in the flash evaporator to generate a concentrated anolyte product; and
h) recirculating the concentrated anolyte product to the anolyte compartment of the electrolyser.

The present invention also provides a method for the processing of a lithium chloride brine comprising:
a) providing a lithium chloride brine having a concentration of at least about 20% w/w LiCl;
b) diluting a first portion of said brine to provide a brine having a concentration of about 14% w/w or less LiCl;
c) subjecting the diluted brine obtained from step (b) to at least one ion exchange process, thereby removing at least one impurity from the brine;
d) performing a first forward osmosis step, wherein the brine obtained from step (c) is the feed solution and a second portion of the brine provided in step (a) is the draw solution, thereby concentrating the feed solution to obtain a purified brine having a concentration of at least about 15% w/w LiCl, and diluting the draw solution to form a diluted draw solution;
e) feeding the purified brine having a concentration of at least about 15% w/w LiCl obtained from step (d) to the anolyte compartment of an electrolyser;
f) feeding a catholyte to the catholyte compartment of the electrolyser;
g) electrolysing the anolyte and catholyte suppled in steps (e) and (f) in the electrolyser, thereby forming a catholyte product comprising lithium hydroxide and an anolyte product comprising a more dilute lithium chloride brine than the brine that is fed into the anolyte compartment in step (e);
h) subjecting the diluted draw solution obtained in step (d) to at least one ion exchange process, thereby removing at least one impurity from the diluted draw solution;
i) performing a second forward osmosis step, wherein the brine obtained from step (h) is the feed solution and a lithium chloride brine having a concentration of at least about 20% w/w LiCl is the draw solution, thereby concentrating the feed solution to obtain a purified brine having a concentration of at least about 15% w/w LiCl;
j) feeding the purified brine having a concentration of at least about 15% w/w LiCl obtained from step (i) to the anolyte compartment of an electrolyser;
k) feeding a catholyte to the catholyte compartment of the electrolyser; and
l) electrolysing the anolyte and catholyte supplied in steps (j) and (k) in the electrolyser, thereby forming a catholyte product comprising lithium hydroxide and an anolyte product comprising a more dilute lithium chloride brine than the brine that is fed into the anolyte compartment in step (j).

The present invention provides an apparatus for the processing of lithium chloride brine comprising:
a) an electrolyser comprising an anolyte compartment, a catholyte compartment and an ion exchange membrane between the anolyte compartment and the catholyte compartment;
b) an ion exchange column adapted to remove at least one impurity from a lithium chloride brine;
c) means for feeding a lithium chloride brine from the ion exchange column to the anolyte compartment;
d) means for feeding a solution comprising lithium hydroxide and water to the catholyte compartment;
e) a vacuum flash evaporator fluidly connected to the anolyte compartment, wherein the vacuum flash evaporator is configured to receive the anolyte product formed in the electrolyser and evaporate water from the anolyte product to form a concentrated anolyte product stream, wherein the vacuum flash evaporator is connected directly to the anolyte compartment of the evaporator such that no other stream can be mixed with the anolyte product stream between the anolyte product stream exiting the electrolyser and entering the flash evaporator; and
f) means to recirculate the concentrated anolyte product stream from the vacuum flash evaporator to the anolyte compartment of the electrolyser.

The present invention also provides an apparatus for the processing of lithium chloride brine comprising:
a) an electrolyser comprising an anolyte compartment, a catholyte compartment and an ion exchange membrane between the anolyte compartment and the catholyte compartment;
b) a forward osmosis unit located upstream of the electrolyser, wherein the forward osmosis unit comprises a draw chamber, a feed chamber and a semi-permeable membrane between the draw chamber and the feed chamber, wherein the draw chamber and the feed chamber each comprise an inlet for receiving lithium chloride brine and an outlet for the outflow of lithium chloride brine;
c) a means for supplying lithium chloride brine from the outlet of the feed chamber of the forward osmosis unit to the anolyte compartment of the electrolyser;
d) an ion exchange column comprising an inlet, an outlet and an ion exchange resin for the removal of at least one impurity from the lithium chloride brine;
e) a means for supplying lithium chloride brine from the outlet of the draw chamber to the inlet of the ion exchange column; and
f) a means for supplying lithium chloride brine from the outlet of the ion exchange column to the inlet of the feed chamber of the forward osmosis unit.

Additional preferred features of the methods and apparatus of the invention are described below and are defined in the appended claims.

### BRIEF DESCRIPTION OF THE DRAWINGS

Figure 1 depicts an implementation of the method of the invention that involves using a vacuum flash evaporator to concentrate the anolyte product stream.
Figure 2 depicts an implementation of the process that involves using forward osmosis to concentrate the brine prior to electrolysis.
Figure 3 depicts an implementation of the process that involves using forward osmosis to concentrate the brine prior to electrolysis in combination with using a vacuum flash evaporator to concentrate the depleted anolyte formed during electrolysis.

### DETAILED DESCRIPTION

The present invention provides processes for the electrolytic conversion of lithium chloride to lithium hydroxide in which the water balance in the operating plant can be controlled more efficiently, as well as apparatus for performing said processes.

As explained above, the control of water balance is an important aspect of processes for the electrolytic conversion of lithium chloride brine to lithium hydroxide. Lithium chloride brines, which is typically obtained either from salars or from the reaction of lithium-containing minerals with acids, contain various impurities which must be removed to a very low level before electrolysis if battery grade lithium hydroxide is to be obtained. Processes such as ion exchange are typically used to remove impurities, especially divalent impurities and boron impurities, to a very low level prior to electrolysis, but these require the brine to be dilute (usually below 10% w/w LiCI) in order to work efficiently. However, the brine then needs to be concentrated before undergoing electrolysis, usually to a concentration of at least 16% w/w LiCl, preferably in the range from about 16% w/w LiCl to about 24% w/w LiCl, more preferably in the range from about 16% w/w LiCl to about 20% w/w LiCl, which requires the removal of water. This may be performed using an evaporator (e.g. a forced circulation evaporator), but the evaporation of water is energy intensive due to its high heat capacity and high latent heat of vaporisation. This is a first point in the process where energy input is usually required in order to concentrate a brine stream.

The electrolysis process yields a catholyte solution that contains a relatively high concentration of high purity lithium hydroxide, from which battery grade lithium hydroxide can be crystallised. Alternatively, the catholyte solution can be reacted with carbon dioxide after being removed from the electrolyser, in order to form battery grade lithium carbonate. However, the electrolysis process also yields a depleted anolyte product, which is a weak solution of LiCl in water. It is desirable to recover the lithium from this depleted anolyte product, rather than wasting it, in order to avoid lithium losses. In order to be recycled and subjected to electrolysis again, it needs to be concentrated to a suitable concentration for electrolysis. This is a second point in the process where energy input is usually required in order to concentrate a brine stream.

The present invention provides methods that reduce the energy input needed in order to concentrate the lithium chloride brine at the relevant stages of the process that are mentioned above, and the methods of the invention therefore increase the energy efficiency of the overall process and reduce operating costs of the plant. This is environmentally beneficial as well as making lithium refining more attractive from a cost perspective.

### Process using heat generated during electrolysis to drive concentration of depleted anolyte product

A first method of the invention relates to a process in which the heat generated during electrolysis is used to make evaporation of water from the anolyte product stream (*i.e.* the depleted anolyte formed during electrolysis) more efficient.

Thus, the invention provides a method for the processing of a lithium chloride brine comprising:
a) adding a base to the brine to increase the pH of the brine and cause precipitation of divalent impurities;
b) performing at least one ion exchange process to remove at least one impurity from the brine, thereby forming a purified brine;
c) feeding the purified brine to the anolyte compartment of an electrolyser;
d) feeding a catholyte to the catholyte compartment of the electrolyser;
e) electrolysing the anolyte and catholyte in the electrolyser, thereby forming a catholyte product comprising lithium hydroxide and an anolyte product comprising a more dilute lithium chloride brine than the brine that is fed into the anolyte compartment in step (c);
f) removing the anolyte product from the electrolyser and supplying the anolyte product stream to a flash evaporator without mixing it with any other liquid stream between exiting the electrolyser and entering the flash evaporator;
g) increasing the concentration of the anolyte product stream by vacuum evaporation in the flash evaporator to generate a concentrated anolyte product; and
h) recirculating the concentrated anolyte product to the anolyte compartment of the electrolyser.

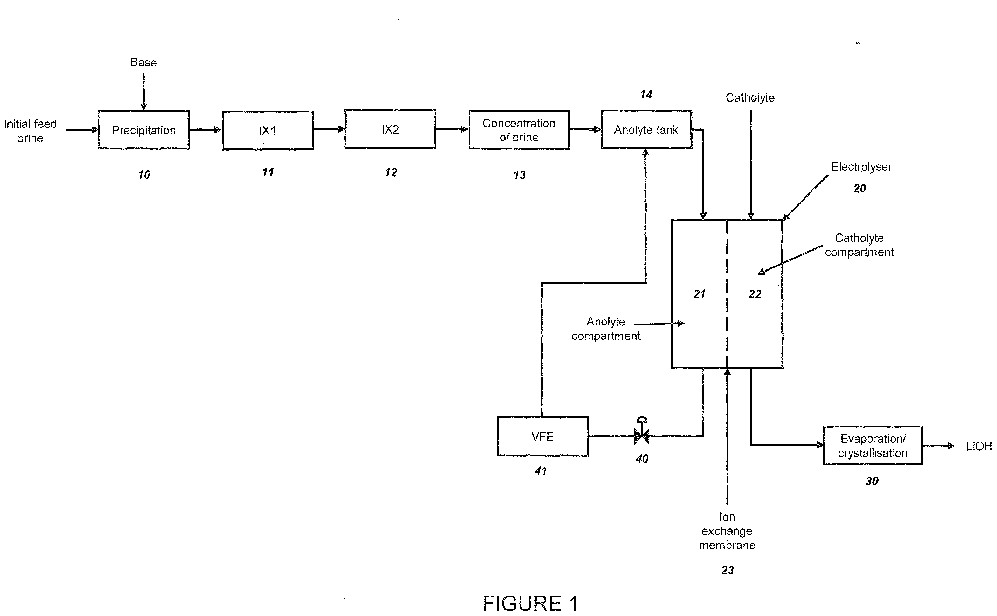

An implementation of this process is depicted in Figure 1.

The lithium chloride brine may be obtained in any of the typical ways of obtaining a lithium chloride brine for electrolytic processing into lithium hydroxide. For example, the lithium chloride brine may be obtained from a salar or may be obtained by reacting a lithium-containing mineral with acid. A preferred way of obtaining the brine is to react lithium carbonate with hydrochloric acid. The lithium chloride brine may also be obtained by direct lithium extraction (DLE) from a brine. DLE involves pumping a brine from a basin aquifer to a DLE plant where a resin is used to extract lithium chloride from the brine, before the spent brine is reinjected into the basin.

The brine is subjected to purification steps which preferably comprise preforming impurity precipitation **10** by adding a base to the brine to increase the pH of the brine and cause precipitation of divalent impurities and performing at least one ion exchange process (IX1, **11**) to remove at least one impurity from the brine, thereby forming a purified brine. It is necessary to remove or reduce the level of impurities in order to enable the production of high purity lithium hydroxide by electrolysis and subsequent crystallisation. In addition, certain metal impurities such as calcium, magnesium and iron have a tendency to precipitate as their insoluble hydroxide salts in the cation-selective membrane that is used in the electrolyser to separate the catholyte from the anolyte. This reduces the ability of lithium ions to pass through the membrane, thereby reducing the efficiency of electrolysis and the overall process, and shortens the life of the membrane.

Consequently, the lithium chloride brine is preferably subjected to an impurity precipitation step **10** in which a base is added to increase the pH of the brine, causing precipitation of divalent impurities. Preferably, in this step, the pH of the solution is raised to above about 10, more preferably in the range of about 10 to about 12, and most preferably in the range of about 10.5 to about 11.5. This may be achieved by adding any suitable base to increase the pH to the desired range. Preferably, the base is an alkali metal or alkaline earth metal salt, more preferably the base is selected from lithium hydroxide, lithium carbonate, sodium carbonate and calcium hydroxide. The use of lithium hydroxide as a base is particularly preferred and preferably, a lithium hydroxide solution may be obtained for this purpose from the catholyte that is removed from the electrolyser. The catholyte is removed from the electrolyser in order to crystallize the high purity lithium hydroxide product, but part of this solution may be used as a base in the impurity precipitation step to avoid the need to supply an external source of base for this step.

The addition of base in the impurity precipitation step causes precipitation of divalent impurities, in particular calcium and magnesium, as insoluble salts. These are typically precipitated as hydroxide salts, although calcium may precipitate as calcium carbonate. Trivalent impurities, boron impurities, fluoride impurities and silica may also precipitate out of the brine at this step. Iron hydroxide may also precipitate in this process. The insoluble salts that are formed are typically removed from the liquid stream by filtration.

The ion exchange process(es) may remove divalent impurities to a lower level than can be achieved by impurity precipitation using a base. The use of ion exchange (IX1, 11) to remove divalent impurities is well-established in the art and can be achieved by passing the brine though ion exchange columns that contain ion exchange resins designed to remove divalent impurities. Such resins are readily available and include weakly acidic, macroporous cation exchange resins, for example Lewatit^{®} TP 208 and Lewatit^{®} TP 206 resins sold by Lanxess. Preferably, the ion exchange step removes divalent impurities selected from the group consisting of calcium, magnesium, strontium and barium. Preferably, the levels of magnesium and calcium ions are reduced to a level of <150 ppb, more preferably <100 ppb, by the ion exchange step. Even more preferably, the levels of calcium, magnesium, strontium and barium ions are reduced to a level of <150 ppb, more preferably <100 ppb, by the ion exchange step.

The fresh brine stream is preferably also subjected to a second ion exchange process (IX2, 12; which may take place before or after the ion exchange process that removes divalent impurities; it does not necessarily need to take place after IX1 as shown in Figure 1), wherein the second ion exchange process removes boron impurities. The use of ion exchange to remove boron impurities is well-established in the art and can be achieved by passing the brine though ion exchange columns that contain ion exchange resins designed to remove boron. Preferably, the level of boron is reduced to a level of <150 ppb, more preferably <100 ppb, by the ion exchange step.

The brine may be subjected to one or more additional, optional purification steps. Said additional purification steps may comprise a third ion exchange step (e.g. for the removal of fluoride ions from the brine) and/or a step that removes silica from the brine. The removal of silica may be achieved, for example, by contacting the brine with iron oxide, wherein the iron oxide adsorbs the silica from the brine. The iron oxide is preferably in powder form and the brine is passed through an adsorber vessel containing the iron oxide powder. For this purpose, an iron oxide absorber such as a Bayoxide^{®} iron oxide adsorber marketed by Lanxess may be used.

During the purification steps, in particular impurity precipitation and ion exchange steps, the fresh brine stream is typically fairly dilute. The concentration of the brine during these steps is usually about 10% w/w or lower, preferably in the range from about 1% w/w to about 10 % w/w LiCl, for example in the range from about 5% w/w to about 10 % w/w LiCl or in the range from about 8% w/w to about 10 % w/w LiCl. This is necessary because ion exchange columns do not function efficiently at higher concentrations and therefore the concentration needs to be relatively low in order to achieve sufficient removal of the relevant impurities. However, as mentioned above, for electrolysis the brine needs to be more concentrated, typically having a concentration of at least about 16% w/w, preferably in the range from about 16% w/w to about 24% w/w LiCl (e.g in the range from about 16% w/w to about 20% w/w LiCl). The brine may therefore be subjected to a concentration step 13 after the purification steps are complete, before the brine is supplied to the anolyte compartment of the electrolyser. Concentration of the brine is typically achieved using an evaporator after impurity removal is complete, before supplying the purified brine to the anolyte compartment of the electrolyser. The evaporator may, for example, be a forced circulation evaporator of the type that will be familiar to those skilled in the art. Alternatively, mechanical vapour recompression (MVR) may be used to concentrate the brine. Those skilled in the art will be familiar with the principle of MVR and the equipment used to perform this process. A further alternative is to use forward osmosis to concentrate the brine, which is beneficial from the point of view of requiring much less energy input than using an evaporator or MVR. A forward osmosis process that may be used for this purpose is explained in detail in the section relating to forward osmosis below.

The concentrated, purified brine is the supplied to the anolyte compartment **21** of an electrolyser **20** to be electrolysed. Those skilled in the art will be familiar with the typical design of an electrolyser. The electrolyser cell comprises an anolyte compartment **21,** catholyte compartment **22** and an ion exchange membrane **23** between the anolyte compartment and catholyte compartment. The anolyte is in contact with an anode in the anolyte compartment and the catholyte is in contact with a cathode in the catholyte compartment. A source of electrical power, usually a DC source, is connected to the electrolyser cell to maintain a potential difference across the cell.

The catholyte is typically a weak solution of LiOH in water. The catholyte solution should not be overly strong in order to minimise precipitation of hydroxides in the cell and migration of hydroxyl ions through the membrane from the catholyte to the anolyte, which can cause the production of undesirable chlorine oxide by-products. The catholyte feed may suitably be a 1-7% LiOH solution in water.

The purified lithium chloride brine is fed to the anolyte compartment **21** of the electrolyser **20** and serves as the anolyte.

During the electrolysis process, chloride ions are oxidised to Cl₂ gas at the anode and water is reduced to hydroxide (OH⁻) ions at the cathode, along with the production of H₂ gas. The lithium (Li⁺) ions are attracted to the negatively charged cathode and cross the ion exchange membrane into the catholyte compartment, where they combine with OH⁻ ions formed from the splitting of water at the cathode to form LiOH. The passage of OH⁻ ions to the anolyte compartment is substantially prevented by the selective ion exchange membrane, which prevents the passage of anions such as hydroxide.

The ion exchange membrane **23** is suitably a cation-selective exchange membrane that selectively allows the passage of lithium cations but prevents the passage of other cations and anions such as hydroxide and sulfate (SO₄²⁻). Those skilled in the art of electrolysis will be well aware of such membranes, many of which are available commercially, including those sold under the product names Nafion^{™}, Fumatech^{™}, Neosepta^{™}, Flemion^{™} and Aciplex^{™}.

The overall reaction taking place in the electrolyser is:

2LiCl + 2H₂O → H₂ + Cl₂ + 2LiOH

The electrolysis process thus results in the production of a weak lithium chloride brine in the anolyte compartment (commonly referred to as a "depleted anolyte") as a result of lithium ions crossing to the catholyte compartment and oxidation of Cl⁻ to Cl₂. It also results in the production of a strong caustic solution of LiOH in the catholye compartment, where LiOH accumulates due to passage of lithium ions from the anolyte compartment and the formation of OH⁻ ions at the cathode.

The strong solution of LiOH in the catholyte compartment is removed and lithium hydroxide may be isolated from the catholyte by crystallisation. Those skilled in the art will be familiar with suitable methods of isolating lithium hydroxide by crystallisation **30.** For example, the LiOH solution may be first be subjected to evaporation to remove water. The solution may be heated in a vapour pre-heater and then low pressure steam introduced to cause evaporation of water, in order to concentrate the solution. Lithium hydroxide monohydrate (LiOH.H₂O) crystallises from the concentrated LiOH solution. These crystals may be isolated by centrifugation to separate them from the spent liquor. Optionally, the LiOH.H₂O crystals may be redissolved in distilled water and recrystallised, to produce higher purity crystals.

In this way, battery grade lithium hydroxide monohydrate can be produced. Battery grade lithium hydroxide monohydrate is lithium hydroxide monohydrate with a purity of higher than 99.5%, preferably at least 99.9%. Such lithium hydroxide monohydrate is suitable for use in the manufacture of cathode materials for lithium-ion batteries.

The processes of the invention may be used to produce high purity lithium hydroxide monohydrate, as described above. However, this is not necessarily the final product of the processes since optionally, the lithium hydroxide monohydrate crystals may be reacted with CO₂ in order to produce battery grade lithium carbonate, i.e. lithium carbonate with a purity of higher than 99.5%, preferably at least 99.9%, as the final product of the processes. This may be achieved, for example, by dissolving the crystals in water and bubbling CO₂ through the solution, preferably at a temperature of at least 80 °C, such as a temperature in the range of 80-100°, more preferably 90-100 °C. This causes the formation of lithium bicarbonate (LiHCO₃) which decomposes to form Li₂CO₃ at the elevated temperature at which the reaction preferably takes place.

As an alternative to isolation of lithium hydroxide from the catholyte by crystallisation, CO₂ may be added to the catholyte in order to form lithium carbonate via the reaction of LiOH in the catholyte with CO₂. This carbonation step may be performed, for instance, by bubbling CO₂ through the catholyte solution, preferably at a temperature of at least 80 °C, such as a temperature in the range of 80-100°, more preferably 90-100 °C. This causes the formation of lithium bicarbonate (LiHCO₃) which decomposes to form lithium carbonate (Li₂CO₃) at the elevated temperature at which the reaction preferably takes place.

The lithium carbonate produced by the above process precipitates out of the solution and may be isolated by filtration or centrifugation 1. It can then be washed (e.g. with water) and dried, and optionally can be pulverised to the desired particle size, before being packaged.

The lithium carbonate formed by reaction of the catholyte solution with CO₂ is usually of battery grade. Battery grade lithium carbonate is lithium carbonate with a purity of higher than 99.5%, preferably at least 99.9%. Such lithium carbonate is suitable for use in the manufacture of cathode materials for lithium-ion batteries.

Meanwhile, the depleted anolyte formed during electrolysis needs to be processed so that it can be recycled in the process, rather than wasting the lithium it contains.

It should be noted that the terms "depleted anolyte" and "anolyte product" are used synonymously herein to refer to the weak lithium chloride brine formed in the anolyte compartment of the electrolyser during electrolysis. When the anolyte product/depleted anolyte is removed from the electrolyser, it forms an "anolyte product stream".

During electrolysis, heat is generated due to the Joule heating effect, as a result of electrical current running through components in the electrolyser that have electrical resistance. This means that the anolyte is heated by the Joule heating effect during electrolysis and therefore electrolysis produces a hot depleted anolyte, typically having a temperature of at least 50 °C, most typically in the range from about 70 °C to about 95 °C. The anolyte product is removed from the electrolyser **20** as an anolyte product stream and is supplied to a flash evaporator (which may also be referred to as a vacuum flash evaporator or "VFE") **41** without mixing it with any other liquid stream, which means that the anolyte reaches the vacuum flash evaporator while it is still hot as a result of the heat generated during electrolysis. The evaporation process therefore makes use of the heat generated during electrolysis and this means that it is easier to evaporate the water from the anolyte product stream, thus increasing the energy efficiency of the process.

The process involves not mixing the anolyte product stream from the electrolyser with any other liquid stream (e.g. a fresh brine stream) prior to concentrating it using a vacuum flash evaporator. This means that the anolyte product stream is not mixed with another liquid between leaving the electrolyser and entering the vacuum flash evaporator. Hence, the term "not mixing the anolyte product stream from the electrolyser with any other liquid stream" encompasses not mixing the anolyte product stream from the electrolyser with other liquid in a vessel. Preferably, the anolyte product stream passes along a conduit from the anolyte compartment of the electrolyser to the vacuum flash evaporator, optionally wherein the conduit is interrupted by a valve (e.g. a pressure reduction valve) but otherwise without passing through any other vessel (i.e. the anolyte product stream passes directly from the anolyte compartment of the electrolyser to the vacuum flash evaporator). Preferably, no chemical reagents are added to the anolyte product stream between it exiting the electrolyser and entering the vacuum flash evaporator. The term "chemical reagents" refers to substances that participate in a chemical reaction (e.g. dechlorination) with a component of the anolyte product stream and does not include steam. However, as explained below, preferably no steam is added to the anolyte product stream between it exiting the electrolyser and entering the vacuum flash evaporator. The direct passage of the anolyte product stream to the flash evaporator, preferably without the addition of any chemical reagents or steam between the electrolyser and vacuum flash evaporator, ensures that as much as possible of the heat generated during electrolysis is used to make evaporation in the flash evaporator more efficient, which reduces the amount of energy required to concentrate the anolyte product stream.

This process is significantly more efficient than processes that involve mixing the depleted anolyte with a fresh brine stream (e.g. in an anolyte tank) and then concentrating the combined brine that results, because in such a process, the heat of the depleted anolyte that is removed from the electrolyser is dissipated into the combined brine, which then has a lower temperature than the anolyte product stream exiting the electrolyser. The combined brine may then require some additional heat to be supplied to drive the evaporation of water by an evaporator, and/or a greater pressure reduction may be required in order to evaporate the water, and thus the heat from electrolysis is not used as efficiently to facilitate evaporation. In contrast, the process of the present invention makes efficient use of the heat from the electrolysis process to drive concentration of the anolyte product stream.

The process is also significantly more efficient than processes that use more energy intensive methods of evaporating water, such as processes that use heated and pressurised steam in evaporators or heat exchangers in order to achieve the removal of water. The use of vacuum flash evaporation is much simpler and requires much less energy input than such processes. The process of the present invention leads to reduced energy input and therefore lower capital expenditure and operating expenditure than such processes.

Preferably, no additional heat is supplied to the anolyte product stream in addition to the heat generated in the electrolyser, prior to step (g). A small amount of steam, which does not significantly increase the temperature of the anolyte product stream, may be added to the anolyte product stream in the vacuum flash evaporator for the purpose of providing fine control over the flash evaporation process (rather than for the purpose of significantly increasing the temperature of the stream), but otherwise preferably no additional heat is supplied to the anolyte product stream during step (g) in addition to the heat generated in the electrolyser. Preferably, no additional heat is supplied to the anolyte product stream during step (g) in addition to the heat generated in the electrolyser other than steam that is added to the anolyte product stream in the vacuum flash evaporator, wherein said steam increases the temperature of the anolyte product stream by less than 5 °C, preferably less than 2 °C, more preferably less than 1 °C. More preferably, no additional heat is supplied to the anolyte product stream in the vacuum flash evaporator during step (g) in addition to the heat generated in the electrolyser. Even more preferably, no additional heat is supplied to the anolyte product stream in addition to the heat generated in the electrolyser, prior to and during step (g), i.e. the increase in concentration in step (g) is achieved using only heat generated during electrolysis as a source of heat. This means that the concentration of the anolyte is increased by a process wherein the only heat that is supplied to achieve this is the heat that is generated during the electrolysis process. This is beneficial relative to processes that involve additional sources of heat being used to increase the temperature of the anolyte product stream prior to it being concentrated by reducing the energy input used to heat the anolyte product stream and making use solely of the heat that is generated during electrolysis.

The pressure of the anolyte in the anolyte compartment of the electrolyser may be in the range from about 0kPa (g) to about 300 kPa (g), such as in the range from about 0 kPa(g) to about 200 kPa(g) or in the range from about 0 kPa(g) to about 40 kPa(g), wherein kPa(g) refers to the "gauge pressure" in kPa, i.e. the difference between the absolute pressure and atmospheric pressure. The pressure of the anolyte product stream may be reduced by flowing it through a pressure reduction valve **40** after it has been removed from the electrolyser and before it enters the vacuum flash evaporator (VFE) **41.** This pressure reduction assists the evaporation of water in the vacuum flash evaporator and helps to provide greater control of the flashing process. The pressure reduction valve may reduce the pressure of the anolyte product stream to a pressure in the range from about 1 kPa(a) to about 100 kPa(a), preferably in the range from about 1 kPa(a) to about 50 kPa(a), more preferably in the range from about 1 kPa(a) to about 20 kPa(a), wherein kPa(a) is the pressure in kPa relative to the pressure in a perfect vacuum at absolute zero (i.e. the true pressure value).

Those skilled in the art will be familiar with the operation of a vacuum flash evaporator, the design and operation of which is well known in the art. Vacuum flash evaporators enable evaporation of water to be achieved at relatively low process temperatures. The input liquid (here, the anolyte product stream from the electrolyser) may optionally be mixed with circulating fluid in the vacuum flash evaporator. The fluid is then passed through a flash orifice into a chamber of lower pressure, where a partial vacuum is achieved using a vacuum pump. The sudden pressure drop experienced by the fluid as it enters this chamber causes a portion of the fluid to flash and be converted into steam (vapour), resulting in the fluid being concentrated and cooled to the boiling point of the fluid. The concentrated fluid (here, a concentrated anolyte product stream, i.e. a more concentrated lithium chloride brine than that which entered the vacuum flash evaporator from the electrolyser) exits the electrolyser and is recirculated to the anolyte compartment of the electrolyser, as described in further detail below. The vapour that is flashed is removed through a vapour outlet and condensed. This condensed vapour may be used as cooling water which helps to provide the vacuum in the flash evaporator.

Step (g) preferably increases the concentration of the anolyte product stream to a concentration of at least 16% w/w LiCl, preferably in the range from about 16% w/w to about 24% w/w LiCl, more preferably in the range from about 16% w/w to about 20% w/w LiCl.

The process comprises recirculating the concentrated anolyte product generated by concentration in the vacuum flash evaporator to the anolyte compartment **21** of the electrolyser **20.** This may involve direct recirculation to the anolyte compartment **21** of the electrolyser, i.e. passing it from the vacuum flash evaporator to the anolyte compartment of the electrolyser without mixing it with any other liquid stream, such as a fresh brine stream. As used herein, the term "fresh brine stream" refers to a lithium chloride brine stream that has not previously been subjected to electrolysis. Typically, the fresh brine stream has been subjected to one or more brine purification steps (such as precipitation **10** of impurities by addition of a base, and one or more ion exchange processes (IX1 (**11**), IX2 (**12**)) and may have been concentrated **13** after the purification steps (e.g. using an evaporator). Figure 1 depicts the brine being subjected to precipitation **10** by the addition of a base, two ion exchange processes (IX1 (**11**), IX2 (**12**)) and concentration **13**; it is preferred but not mandatory for the process to include all of these steps.

Preferably, the concentrated anolyte product stream that is formed in step (g) is mixed with a fresh brine input stream prior to step (h). Preferably, this mixing takes place in an anolyte tank **14,** as shown in Figure 1 (although, as noted above, the presence of an anolyte tank is not mandatory and the concentrated anolyte product stream may pass directly from the outlet of the vacuum flash evaporator to the inlet of the anolyte compartment of the electrolyser). The combined brine formed in the anolyte tank is then recirculated to the anolyte compartment **21** of the electrolyser. This is achieved by the combined brine stream being pumped through a conduit to the anolyte compartment of the electrolyser. An anolyte pump may be arranged to pump the brine stream along the conduit to the anolyte compartment of the electrolyser.

The fresh brine stream that may be mixed with the concentrated anolyte stream from the vacuum flash evaporator is a brine stream that has not previously been electrolysed, and is typically the purified, concentrated brine formed by the steps described above and depicted as steps **10** to **13** in Figure 1.

Following concentration of the fresh, purified brine stream to the desired concentration, this stream may be combined with the concentrated anolyte product stream (i.e. the concentrated stream that results from concentration of the depleted anolyte in a vacuum flash evaporator) as described above. Preferably, this takes place in an anolyte tank **14** (i.e. a tank used for the mixing and storage of lithium chloride brine, which is used as the anolyte in electrolysis). Since the fresh, purified brine stream that has been concentrated to the desired concentration for electrolysis is combined with an anolyte product stream that has also been concentrated to a similar concentration (i.e. to a concentration of at least 16% w/w LiCl, preferably in the range from about 16% w/w to about 24% w/w LiCl, more preferably in the range from about 16% w/w to about 20% w/w LiCl), less energy is required for concentration of the fresh, purified brine stream than would be required if the anolyte product stream had not been concentrated prior to mixing with the fresh, purified brine stream; in that scenario, the fresh, purified brine stream would have to be concentrated to a higher concentration so that after dilution with the weaker anolyte product stream, the concentration of the combined brine was suitable for electrolysis. The use of vacuum flash evaporation to concentrate the anolyte product stream from the electrolyser, making use of the heat generated during electrolysis, thus reduces the overall energy input required for evaporation during the overall process. Furthermore, as explained above, making use of the heat generated during electrolysis is also more energy efficient than combining the anolyte product stream with fresh, purified brine without concentrating the anolyte product stream first, and then concentrating the resulting combined brine, since this makes less efficient use of the heat generated during electrolysis.

As will be appreciated by those skilled in the art, the process of the invention is typically performed as a continuous process. In other words, the initial lithium chloride brine is prepared for electrolysis as described above by being purified and then concentrated, and said brine is then electrolysed, before the resulting depleted anolyte (anolyte product) is subjected to steps (f) to (h), and thus recirculated to the electrolyser, preferably after being mixed with a fresh, purified brine stream that has been purified and concentrated to the appropriate concentration as described above before the resulting combined brine stream is recirculated to the anolyte compartment of the electrolyser. The combined brine stream is preferably not subjected to further concentration before entering the anolyte compartment of the electrolyser, but a further concentration step may be performed if necessary.

### Apparatus for process involving use of vacuum flash evaporator to concentrate anolyte product stream

The present invention also provides apparatus for the process involving the use of a vacuum flash evaporator to concentrate the anolyte product stream making use of the heat generated using electrolysis.

Thus, the present invention provides an apparatus for the processing of lithium chloride brine comprising:
(a) an electrolyser comprising an anolyte compartment, a catholyte compartment and an ion exchange membrane between the anolyte compartment and the catholyte compartment;
(b) an ion exchange column adapted to remove at least one impurity from a lithium chloride brine;
(c) means for feeding a lithium chloride brine from the ion exchange column to the anolyte compartment;
(d) means for feeding a solution comprising lithium hydroxide and water to the catholyte compartment;
(e) a vacuum flash evaporator fluidly connected to the anolyte compartment, wherein the vacuum flash evaporator is configured to receive the anolyte product formed in the electrolyser and evaporate water from the anolyte product to form a concentrated anolyte product stream, wherein the vacuum flash evaporator is connected directly to the anolyte compartment of the evaporator such that no other stream can be mixed with the anolyte product stream between the anolyte product stream exiting the electrolyser and entering the flash evaporator; and
(f) means to recirculate the concentrated anolyte product stream from the vacuum flash evaporator to the anolyte compartment of the electrolyser.

The means for feeding or recirculating brine or other streams/solutions mentioned above are each preferably a conduit along which the relevant fluid may pass. The apparatus may comprise pumps to pump the relevant fluid along said conduits.

Preferably, the apparatus comprises a vessel **10** in which impurity precipitation can take place by the addition of a base. Preferably the apparatus comprises two ion exchange columns, a first ion exchange column **11** and a second ion exchange column **12.** Preferably, the apparatus comprises a vessel **10** for impurity precipitation situated upstream of a first ion exchange column **11** and a second ion exchange column **12.** When the apparatus comprises two ion exchange columns, the apparatus comprises a means for feeding lithium chloride brine from the second ion exchange column to the anolyte compartment **21** of the electrolyser **20.** The apparatus may optionally comprise a third ion exchange column located downstream of the second ion exchange column and upstream of the electrolyser.

The vacuum flash evaporator **41** is preferably connected to the anolyte compartment of the electrolyser via a conduit which passes directly from the anolyte compartment **21** to the vacuum flash evaporator **41,** wherein said conduit is not connected to a source of any other liquid stream. The conduit preferably does not pass through any vessel between the anolyte compartment of the electrolyser and the vacuum flash evaporator. Preferably, no source of chemical reagents is connected to the conduit.

The term "vessel" refers to a tank or container that can hold fluid. The term "vessel" includes devices through which a fluid stream may pass in which chemical reagents are added to facilitate chemical reactions. It does not include devices such as valves which are designed simply to adjust the flow or pressure of the liquid stream, rather than to hold liquid or facilitate chemical reactions.

Preferably, the apparatus further comprises an anolyte tank **14** situated downstream of the vacuum flash evaporator, wherein the anolyte tank is fluidly connected to the vacuum flash evaporator, ion exchange column and the anolyte compartment of the electrolyser. The anolyte tank has at least two (preferably two) fluid inlets and at least one fluid outlet. The anolyte tank is adapted to receive the concentrated anolyte product stream from the vacuum flash evaporator via a first fluid inlet and to supply brine from the anolyte tank via a fluid outlet to the anolyte compartment of the electrolyser. The anolyte tank is adapted to receive a fresh brine stream via a second fluid inlet, i.e. it comprises a means for feeding an additional lithium chloride brine stream to the anolyte tank. This second fluid inlet is fluidly connected to an ion exchange column (i.e. the second ion exchange column if the apparatus comprises two ion exchange columns). The anolyte tank may be configured to receive fresh, purified brine directly from the ion exchange column, but more typically, the apparatus will be configured such that the brine passes through a device that can concentrate the brine after it exits the ion exchange column and before it reaches the anolyte tank. In other words, the anolyte tank is fluidly connected to source of fresh, purified brine. The fresh, purified brine refers to brine that has been subjected to at least one purification step to remove impurities and which has not previously been subjected to electrolysis. The design of the anolyte tank means that the fresh, purified brine and the concentrated anolyte product stream can be mixed in the anolyte tank before exiting via the fluid outlet to flow to the anolyte compartment of the electrolyser.

Preferably, the apparatus further comprises a pressure reduction valve **40** located between the anolyte compartment of the electrolyser and the vacuum flash evaporator for reducing the pressure of the anolyte product received from the anolyte compartment of the electrolyser before it reaches the vacuum flash evaporator. This allows the pressure of the anolyte product stream to be adjusted before it enters the vacuum flash evaporator, which may help to ensure that the pressure of the stream is optimal for the operation of the vacuum flash evaporator and for maximising the evaporation of water. The vacuum flash evaporator may be adapted to reduce the pressure of the anolyte product stream to a pressure in the range from about 1 kPa(a) to about 100 kPa(a), preferably in the range from about 1 kPa(a) to about 50 kPa(a), more preferably in the range from about 1 kPa(a) to about 20 kPa(a).

Preferably, the apparatus does not comprise any means of heating the anolyte product between the anolyte product exiting the electrolyser and entering the vacuum flash evaporator Preferably, the apparatus does not comprise any means of heating the anolyte product between the anolyte product exiting the electrolyser and entering the vacuum flash evaporator and does not comprise any means of heating the anolyte product inside the vacuum flash evaporator.

The brine typically needs to be concentrated after purification by ion exchange, before it can be electrolysed. The apparatus therefore preferably comprises an evaporator located downstream of the ion exchange column and upstream of the electrolyser, wherein the evaporator is configured to concentrate the brine received from the ion exchange column. The evaporator may be located upstream or downstream of the anolyte tank, but is typically located upstream of the anolyte tank.

The apparatus may comprise a forward osmosis unit located downstream of the ion exchange column and upstream of the electrolyser, wherein the forward osmosis unit comprises a draw chamber, a feed chamber and a semi-permeable membrane between the draw chamber and the feed chamber, wherein the draw chamber and the feed chamber each comprise an inlet for receiving lithium chloride brine and an outlet for the outflow of lithium chloride brine, and wherein the apparatus comprises means for supplying the lithium chloride brine that flows out of the outlet of the feed chamber to the anolyte compartment of the electrolyser. As explained above, lithium chloride brine needs to be dilute for purification by processes such as ion exchange and then needs to be concentrated prior to electrolysis. This configuration of the apparatus relates to a situation where forward osmosis is used to concentrate the brine prior to electrolysis and then the depleted anolyte is concentrated in a vacuum flash evaporator making use of the heat generated by electrolysis before being recycled to the electrolyser.

Downstream of the ion exchange column and upstream of the electrolyser (and, preferably, upstream of the anolyte tank if an anolyte tank is present), the apparatus may comprise a forward osmosis unit and an evaporator, preferably wherein the evaporator is downstream of the forward osmosis unit. Alternatively, the apparatus may comprise a forward osmosis unit in this location but no evaporator prior to electrolysis, since, as explained above, the forward osmosis unit may mean that no additional evaporator is needed to concentrate the brine for electrolysis.

The forward osmosis unit may be incorporated into the overall apparatus in any of the manners described below in the section relating to the apparatus comprising a forward osmosis unit. Thus all features of the apparatus described in that section may be combined with the apparatus described in this section comprising a vacuum flash evaporator fluidly connected to the anolyte compartment of the electrolyser, wherein the vacuum flash evaporator is connected directly to the anolyte compartment of the evaporator such that no other liquid stream can be mixed with the anolyte product stream between the anolyte product stream exiting the electrolyser and entering the flash evaporator.

Thus, in particular, the apparatus may comprise:
(a) a means for supplying lithium chloride brine from the outlet of the feed chamber of the forward osmosis unit to the anolyte compartment of the electrolyser;
(b) an ion exchange column comprising an inlet, an outlet and an ion exchange resin for the removal of at least one impurity from the lithium chloride brine;
(c) a means for supplying lithium chloride brine from the outlet of the draw chamber to the ion exchange column; and
(d) a means for supplying lithium chloride brine from the outlet of the ion exchange column to the inlet of the feed chamber of the forward osmosis unit.

The means for supplying lithium chloride brine from the outlet of the draw chamber to the ion exchange column may be a conduit directly from the outlet of the draw chamber to the ion exchange column, or, more typically, there is a conduit from the outlet of the draw chamber to a vessel in which a base can be added to the brine in order to achieve precipitation of impurities and there is also a conduit from said vessel to the inlet of the ion exchange column.

The means for supplying lithium chloride brine from the outlet of the ion exchange column to the inlet of the feed chamber of the forward osmosis unit may be a conduit directly from the outlet of the ion exchange column to the inlet of the feed chamber or, preferably, may be a conduit leading to the inlet of a second ion exchange column, wherein the outlet of the second ion exchange column is fluidly connected to the inlet of the feed chamber. The fluid connection from the outlet of the second ion exchange column to the inlet of the feed chamber may be a direct connection or the apparatus may be adapted such that the brine stream passes through one or more additional purification steps before entering the inlet of the feed chamber of the forward osmosis unit.

The apparatus preferably further comprises means for supplying the lithium chloride brine that flows out of the outlet of the feed chamber to an anolyte tank situated downstream of the vacuum flash evaporator, wherein the anolyte tank is fluidly connected to the vacuum flash evaporator and the anolyte compartment of the electrolyser. The forward osmosis unit may be the source of the brine stream that enters the anolyte tank via a second fluid inlet, as described above. Thus, the forward osmosis unit may be fluidly connected to the second fluid inlet of the anolyte tank.

### Process for concentration of lithium chloride brine using forward osmosis

As explained above, lithium chloride brine contains a number of impurities, including divalent impurities and boron impurities, that need to be removed from the brine before it can be electrolysed in order to prevent accumulation of the impurities in the membrane in the electrolyser, reducing the efficiency of the electrolyser and impeding the production of high purity, battery grade lithium hydroxide. These impurities need to be removed by precipitation and ion exchange processes, but these processes are ineffective for lithium chloride brines at the high concentration that is necessary for electrolysis (note that this is a marked difference from the processing of sodium chloride brines, where impurities such as calcium and magnesium can efficiently be removed from solutions that are close to saturation). Therefore, the lithium chloride brine needs to be diluted for purification by precipitation and ion exchange and then concentrated again before being fed into the electrolyser.

The concentration of dilute lithium chloride brine prior to electrolysis has typically been achieved using evaporators, which require significant energy input. The concentration of dilute brine may also be achieved using mechanical vapour recompression (MVR), which typically requires less energy input than an evaporator such as a forced circulation evaporator, but still requires some energy input to drive the turbine fan that compresses the vapour in MVR. However, the present invention provides a method of concentrating a lithium chloride brine to a suitable concentration for electrolysis using forward osmosis, which significantly reduces the energy input that is required relative to using an evaporator or MVR.

Thus the present invention provides a method for the processing of a lithium chloride brine comprising:
a) providing a lithium chloride brine having a concentration of at least about 20% w/w LiCl;
b) diluting a first portion of said brine to provide a brine having a concentration of about 14% w/w or less LiCl;
c) subjecting the diluted brine obtained from step (b) to at least one ion exchange process, thereby removing at least one impurity from the brine;
d) performing a first forward osmosis step, wherein the brine obtained from step (c) is the feed solution and a second portion of the brine provided in step (a) is the draw solution, thereby concentrating the feed solution to obtain a purified brine having a concentration of at least about 15% w/w LiCl, and diluting the draw solution to form a diluted draw solution;
e) feeding the purified brine having a concentration of at least about 15% w/w LiCl obtained from step (d) to the anolyte compartment of an electrolyser;
f) feeding a catholyte to the catholyte compartment of the electrolyser;
g) electrolysing the anolyte and catholyte suppled in steps (e) and (f) in the electrolyser, thereby forming a catholyte product comprising lithium hydroxide and an anolyte product comprising a more dilute lithium chloride brine than the brine that is fed into the anolyte compartment in step (e);
h) subjecting the diluted draw solution obtained in step (d) to at least one ion exchange process, thereby removing at least one impurity from the diluted draw solution;
i) performing a second forward osmosis step, wherein the brine obtained from step (h) is the feed solution and a lithium chloride brine having a concentration of at least about 20% w/w LiCl is the draw solution, thereby concentrating the feed solution to obtain a purified brine having a concentration of at least about 15% w/w LiCl;
j) feeding the purified brine having a concentration of at least about 15% w/w LiCl obtained from step (i) to the anolyte compartment of an electrolyser;
k) feeding a catholyte to the catholyte compartment of the electrolyser; and
l) electrolysing the anolyte and catholyte supplied in steps (j) and (k) in the electrolyser, thereby forming a catholyte product comprising lithium hydroxide and an anolyte product comprising a more dilute lithium chloride brine than the brine that is fed into the anolyte compartment in step (j).

The sequence of steps in above process allows the entire initial brine to be concentrated without using an evaporator. Specifically, a portion of the initial input brine provided in step (a) is diluted (usually by the addition of water) and purified whilst another portion of it is left at its initial concentration. The diluted portion is purified using ion exchange and preferably also precipitation prior to ion exchange involving the addition of a base to the brine to precipitate impurities. The purified, dilute brine is then fed to a forward osmosis unit and used as the feed solution, whilst the portion of the initial input brine provided in step (a) is used as the draw solution. The purified brine feed solution is concentrated due to water being drawn across the semi-permeable membrane in the forward osmosis unit due to the higher osmotic pressure of the draw solution, and can then be electrolysed. Meanwhile, the draw solution, which has now been diluted by the forward osmosis process, can be purified using ion exchange and preferably also precipitation using a base prior to ion exchange. This purified, dilute brine can then be fed back into the forward osmosis unit as the feed solution, whilst more of the initial input brine provided in step (a) is used as the draw solution. The purified, dilute brine is concentrated by the forward osmosis process and can be electrolysed.

The process operates continuously, and in this way, the entire input brine can be purified and then concentrated using only forward osmosis. This requires minimal energy input since the processes simply makes use of the difference in osmotic pressure between different portions of the brine. The ability to purify and concentrate the *entire* lithium chloride brine input in this way using forward osmosis has not been described previously and represents a significant increase in energy efficiency over known processes.

Step (a) involves providing a lithium chloride brine having a concentration of at least about 20% w/w LiCl. The concentration may be in the range from about 20% w/w to about 45% w/w LiCl. Preferably, the concentration is at least 25% w/w LiCl, more preferably in the range from about 25% w/w to about 45% w/w LiCl, most preferably in the range from about 25% w/w to about 35% w/w LiCl.

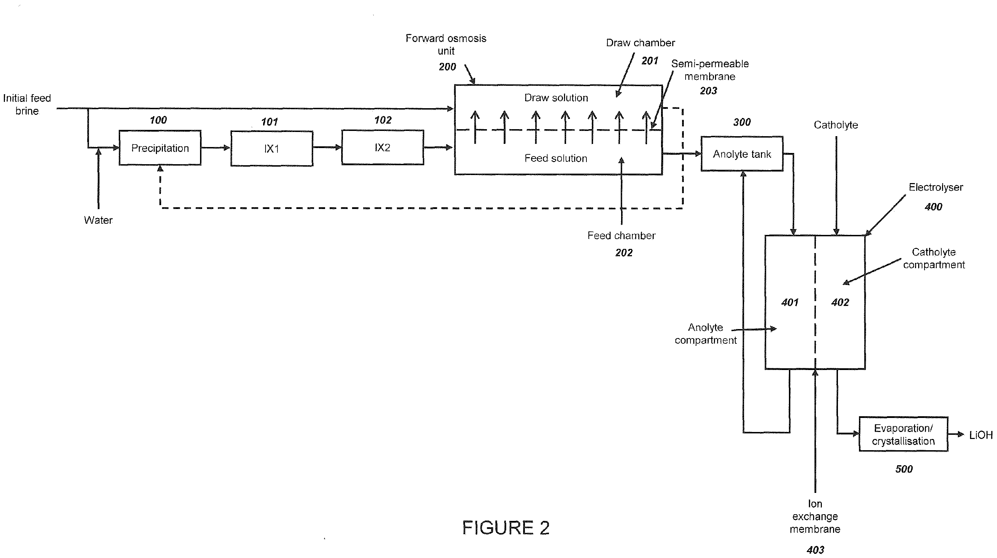

An implementation of the process of the invention involving the use of forward osmosis is depicted in Figure 2.

A first portion of the brine supplied in step (a) is diluted in step (b) to provide a brine having a concentration of about 14% w/w or less LiCl, preferably about 12% w/w or less LiCl. This is typically achieved by the addition of water to a first potion of the brine supplied in step (a). More preferably, step (b) comprises diluting a first portion of the lithium chloride brine to a concentration in the range from about 1% w/w to about 10% w/w LiCl, more preferably in the range from about 5% w/w to about 10% w/w LiCl and even more preferably in the range from about 8% w/w to about 10% w/w LiCl.

The diluted brine formed in step (b) is then subjected to purification to remove impurities from the brine. This involves subjecting the diluted brine obtained from step (b) to at least one ion exchange process, thereby removing at least one impurity from the brine, and preferably also involves adding a base to the brine to increase the pH of the brine and cause precipitation of divalent impurities prior to performing ion exchange.

The impurity precipitation and ion exchange steps are performed as described in detail above in the context of the first method of the invention involving the use of a vacuum flash evaporator to concentrate the anolyte product stream. Therefore, the diluted brine formed in step (b) is preferably subjected to impurity precipitation **100** involving the addition of a base and then to at least one, and preferably two, ion exchange processes (IX1 (**101**) and IX2 (**102**)), wherein each of these processes is performed as described in detail above. Therefore, all of the disclosure above concerning how the impurity precipitation and ion exchange steps **10, 11** and **12** are performed applies equally to steps **100, 101** and **102,** respectively, and is not repeated here in the interest of brevity.

Preferably, the process of the invention does not involve performing a nanofiltration process prior to step (d) that removes divalent ions from the brine that is used as the feed solution in step (d). The reduction in the concentration of divalent ions in the portion of the brine that is then fed to the forward osmosis unit as the feed solution is achieved by ion exchange and preferably also be an impurity precipitation step prior to ion exchange that involves adding a base to the brine that causes precipitation of divalent impurities, as described above, and preferably no further processes that remove divalent ions are performed before step (d) on said brine. Preferably, the process does not involve performing any nanofiltration step prior to step (d) on the portion of the brine that is used as the feed solution in step (d).

Following the purification steps described above, a first forward osmosis step is performed (step (d) of the method). In this step, the brine obtained from step (c) is the feed solution and a second portion of the brine provided in step (a) is the draw solution.

Those skilled in the art will be familiar with the design of a forward osmosis unit, such as that depicted in Figure 2. The forward osmosis unit **200** comprises a draw chamber **201,** a feed chamber **202,** and a semi-permeable membrane **203** separating the two chambers. The feed chamber and the draw chamber each have a fluid inlet and a fluid outlet. Preferably, the forward osmosis unit is configured such that the feed solution and the draw solution flow in countercurrent in the feed chamber and the draw chamber.

The forward osmosis unit may comprise flat sheets of osmotic membranes, hollow fibers, or a combination thereof. Such forward osmosis units are commercially available from various suppliers. The forward osmosis unit may comprise a single forward osmosis module or a plurality of forward osmosis modules connected in series, in parallel and/or in a crossflow arrangement.

As explained above, the brine obtained from step (c) is the feed solution. This solution has a concentration of about 14% w/w or less LiCl, preferably about 12% w/w or less LiCl, more preferably in the range from about 5% w/w to about 10% w/w LiCl, and most preferably in the range from about 8% w/w to about 10% w/w LiCl. A portion of the brine provided in step (a) is used as the draw solution and has a concentration as described above.

The forward osmosis process in step (d) concentrates the feed solution to a concentration of at least about 15% w/w LiCl, preferably at least about 16% w/w LiCl, more preferably in the range from about 16% w/w to about 24% w/w LiCI and most preferably in the range from about 16% w/w to about 20% w/w LiCI. This is a suitable concentration for electrolysis. Preferably, during step (d), the flow rate of the feed solution through the forward osmosis unit is in the range from 3 to 5 times the flow rate of the draw solution. The concentrated purified brine obtained from forward osmosis is then fed to the anolyte compartment **401** of the electrolyser **400.**

The use of this method means that either no evaporator is required to concentrate the brine prior to electrolysis, or that an evaporator is required (since the forward osmosis process has not concentrated the brine sufficiently for electrolysis) but much less energy input is required than would be required if the forward osmosis process of the invention had not been performed. If an evaporator is used to concentrate the brine after any of the forward osmosis steps, it may be used to increase the concentration of the brine to a concentration in the range from about 16% w/w to about 24% w/w LiCl, preferably in the range from about 16% w/w to about 20% w/w LiCl. Preferably, no evaporator is used to concentrate the brine prior to electrolysis and the concentrated feed solution is fed directly to the anolyte compartment **401** of the electrolyser **400** without being concentrated further. The ability to use no evaporator before electrolysis, or to use an evaporator to provide a smaller increase in concentration because the process of the invention involving forward osmosis has achieved most of the increase in concentration that is required prior to electrolysis, represents a significant advantage of the present invention in terms of energy efficiency.

Preferably, the concentrated feed solution obtained from the forward osmosis process in step (d) is supplied to the anolyte compartment of the electrolyser without being subjected to further purification steps. Such purification steps are not necessary because this portion of the brine was subjected to purification prior to forward osmosis.

A catholyte is fed to the catholyte compartment **402** of the electrolyser **400,** said catholyte preferably being a solution of lithium hydroxide in water. The catholyte is preferably a 1-7% w/w solution of LiOH in water.

The method then involves electrolysing the anolyte and catholyte in the electrolyser, in a fashion well known to those skilled in the art and described further above. Electrolysis yields a concentrated solution of lithium hydroxide in the catholyte compartment of the electrolyser. This can be subjected to evaporation and crystallisation **500** in the manner described in detail above, to obtain lithium hydroxide monohydrate crystals. Alternatively, the catholyte product may be reacted with carbon dioxide in the manner described above in order to form lithium carbonate.

The forward osmosis process in step (d) also yields a diluted draw solution. This diluted draw solution is subjected to purification and is then subjected to forward osmosis to concentrate it for electrolysis. It is preferably recirculated to the same forward osmosis unit **200** used in step (d), but may be supplied to a different forward osmosis unit. For the purification steps, the concentration of the brine should be about 14% w/w LiCl or less, preferably about 12% w/w LiCl or less. If necessary, the method comprises adding to the diluted draw solution formed during forward osmosis either water or a lithium chloride brine that contains a lower concentration of lithium chloride than the diluted draw solution obtained from forward osmosis, thereby forming a lithium chloride brine having a concentration of about 14% w/w or less LiCl, preferably about 12% w/w LiCl or less (e.g. in the range from about 1% w/w to about 10% w/w LiCl), more preferably in the range from about 5% w/w to about 10% w/w LiCl, prior to performing the at least one ion exchange process.

The diluted draw solution is then subjected to at least one ion exchange process **101,** thereby removing at least one impurity from the diluted draw solution. Preferably, the diluted draw solution is subjected to impurity precipitation **100** prior to ion exchange, wherein the impurity precipitation involves adding a base to the brine to increase the pH of the brine in the manner described in detail above and cause precipitation of divalent impurities prior to performing ion exchange. Preferably, the process comprises subjecting the diluted draw solution to at least two ion exchange processes (1X1 (**101**) and IX2 (**102**)), preferably wherein one removes divalent impurities and one removes boron impurities. These ion exchange processes are performed in the same manner as described above in the context of step (b). The diluted draw solution obtained from the first forward osmosis step is preferably not subjected to a nanofiltration step that removes divalent impurities. Such a step is not necessary since divalent impurities are removed by impurity precipitation and ion exchange, as described above.

Following purification, the method of the invention involves performing a second forward osmosis step (step (i) of the method involving steps (a) to (l)), wherein the purified brine obtained from step (h) (which results from purification of the diluted draw solution from the first forward osmosis step) is the feed solution and a lithium chloride brine having a concentration of at least about 20% w/w LiCl is the draw solution. Preferably, the lithium chloride brine having a concentration of at least about 20% w/w LiCl that is used as the draw solution in step (i) is a third portion of the brine provided in step (a), and therefore has a concentration within any of the ranges described above for the brine provided in step (a). Preferably, during step (i), the flow rate of the feed solution through the forward osmosis unit is in the range from 3 to 5 times the flow rate of the draw solution.

The second forward osmosis step concentrates the feed solution to obtain a purified brine having a concentration of at least about 15% w/w LiCl, preferably at least about 16% w/w LiCl, more preferably in the range from about 16% w/w to about 24% w/w LiCI and most preferably in the range from about 16% w/w to about 20% w/w LiCl, which can then be used in electrolysis. Since this concentrated feed solution originated from the draw solution in the first forward osmosis step, which was a portion of the initial concentrated brine provided at the start of the process in step (a), it can be seen that both the portion of the initial brine that was diluted and purified in step (b) and the portion of the initial brine that was used as the draw solution in the first forward osmosis step have been prepared for electrolysis by purified and concentrated using only forward osmosis. The concentrated feed solution obtained from the second forward osmosis step (step (i)) may be further concentrated using an evaporator if desired (e.g. to a concentration in the range from about 16% w/w to about 24% w/w LiCl, preferably in the range from about 16% w/w to about 20% w/w LiCl), but this would require less energy than concentrating the brine without using forward osmosis since forward osmosis will have already concentrated the brine to a significant degree.

The concentrated feed solution formed in step (i) is then fed to the anolyte compartment of the electrolyser and electrolysed in the manner described above. It may be fed directly to the electrolyser without being mixed with another liquid stream, but as explained in more detail below, the concentrated feed solution obtained from the second forward osmosis step (step (i)) is preferably combined (after optional further concentration using an evaporator) with the anolyte product stream from the electrolyser, preferably wherein the anolyte product stream has been concentrated using a vacuum flash evaporator. The mixing preferably takes place in an anolyte tank **300.** Preferably, the combined brine that results from said mixing in the anolyte tank **300** flows down a conduit to the anolyte compartment of the electrolyser. An anolyte pump may be arranged to pump the combined brine along the conduit to the anolyte compartment of the electrolyser.

Preferably, the concentrated feed solution obtained from the forward osmosis process in step (i) is supplied to the anolyte compartment of the electrolyser without being subjected to further purification steps. Such purification steps are not necessary because this portion of the brine was subjected to purification prior to forward osmosis.

As explained, the use of the method of the invention means that either no evaporator is required to concentrate the brine prior to electrolysis, or that an evaporator is required (since the forward osmosis process has not concentrated the brine sufficiently for electrolysis) but much less energy input is required than would be required if the forward osmosis process of the invention had not been performed. Preferably, no evaporator is used to concentrate the brine prior to electrolysis. The ability to use no evaporator before electrolysis, or to use an evaporator to provide a smaller increase in concentration because the process of the invention involving forward osmosis has achieved most of the increase in concentration that is required prior to electrolysis, represents a significant advantage of the present invention in terms of energy efficiency.

Electrolysis yields a depleted anolyte (i.e. a weak lithium chloride brine) in addition to the catholyte product containing a high concentration of lithium hydroxide. The process of the invention may also allow for the elimination of an evaporator for concentrating the depleted anolyte formed during electrolysis. As described above, the depleted anolyte (anolyte product stream) that is formed during electrolysis may be concentrated using a vacuum flash evaporator **601** and then recirculated to the anolyte compartment of the electrolyser. Sometimes, mechanical vapour recompression (MVR) may be used in addition to a vacuum flash evaporator to concentrated the anolyte product stream. However, an advantage of using forward osmosis to concentrate the lithium chloride brine prior to electrolysis is that it may enable part or all of this evaporation process performed on the anolyte product stream to be dispensed with. Specifically, the forward osmosis process may concentrate the brine sufficiently that it can be combined with the anolyte product stream from the electrolyser without concentrating the anolyte product stream (e.g. using an evaporator or MVR) and form a combined stream that is still sufficiently concentrated that it can be fed to the electrolyser without being concentrated (e.g. using an evaporator) prior to entering the anolyte compartment of the electrolyser. This is the method shown in Figure 2.

Alternatively, forward osmosis may concentrate the brine sufficiently that only flash evaporation may be used to concentrate the anolyte product stream but additional concentration using MVR is not needed. Forward osmosis may thus remove any need to perform MVR on the anolyte product stream. These advantages represent another way in which the process of the invention can reduce the energy used in the overall process.

Therefore, the invention provides the method described above in steps (a) to (l), wherein the anolyte product formed during electrolysis is removed from the electrolyser and is mixed with the purified brine having a concentration of at least 15% w/w LiCl that is formed in step (d) and step (i) to form a combined stream that is fed into the anolyte compartment of the electrolyser, wherein the anolyte product stream is not concentrated prior to being mixed with the purified brine formed in step (d) and step (i) and the combined stream is not concentrated prior to entering the anolyte compartment of the electrolyser. The invention provides the method described above in steps (a) to (l), wherein the anolyte product formed during electrolysis is removed from the electrolyser and is mixed with the purified brine having a concentration of at least 15% w/w LiCl that is formed in step (d) and step (i) to form a combined stream that is fed into the anolyte compartment of the electrolyser, wherein the anolyte product stream is not concentrated using an evaporator prior to being mixed with the purified brine formed in step (d) and step (i) and the combined stream is not concentrated using an evaporator prior to entering the anolyte compartment of the electrolyser.

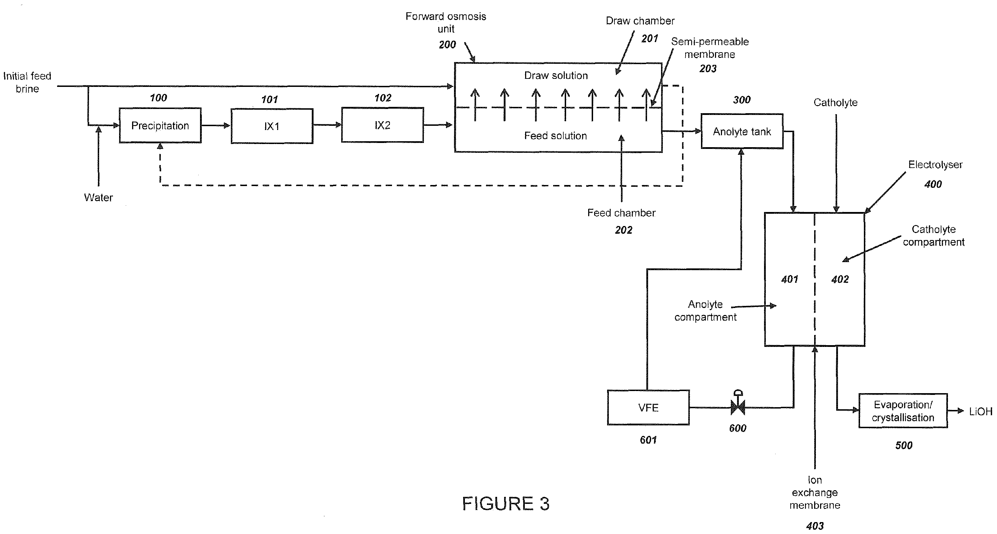

Alternatively, the method described above in steps (a) to (l) may be used in combination with using a flash evaporator to concentrate the anolyte product stream, as shown in Figure 3. Therefore, the method may further comprise:
m) removing the anolyte product from the electrolyser in step (g) and step (l) and supplying it to a flash evaporator 601;
n) increasing the concentration of the anolyte product stream by vacuum evaporation in the flash evaporator 601 to generate a concentrated anolyte product; and
o) recirculating the concentrated anolyte product to the anolyte compartment 401 of the electrolyser **400.**

The anolyte product stream is preferably supplied to the flash evaporator without mixing it with any other liquid stream between exiting the electrolyser and entering the flash evaporator.

A pressure reduction valve **600** may be provided to reduce the pressure of the anolyte product stream after it has been removed from the electrolyser and before it enters the vacuum flash evaporator. This pressure reduction assists the evaporation of water in the vacuum flash evaporator. The pressure reduction valve may be configured to reduce the pressure of the anolyte product stream to a pressure in the range from about 1 kPa(a) to about 100 kPa(a), preferably in the range from about 1 kPa(a) to about 50 kPa(a), more preferably in the range from about 1 kPa(a) to about 20 kPa(a).

Preferably, no additional heat is supplied to the anolyte product stream in addition to the heat generated in the electrolyser, prior to step (n); more preferably no additional heat is supplied to the anolyte product stream in addition to the heat generated in the electrolyser, prior to and during step (n).

Preferably, the method does not comprise further increasing the concentration of the anolyte product removed from the electrolyser using mechanical vapour recompression. This reduces the energy input required in the overall process.

Preferably, the process further comprises mixing the concentrated anolyte product stream produced in step (n) above with the purified brine having a concentration of at least about 15% w/w LiCl (preferably at least about 16% w/w LiCl, more preferably in the range from about 16% to about 24% w/w LiCl, most preferably in the range from about 16% to about 20% w/w LiCl) obtained from step (d) and step (i) of the method of the invention to form a combine brine stream that is then supplied to the anolyte compartment of the electrolyser. Preferably, said mixing takes place in an anolyte tank **300** and the combined brine that is formed is supplied to the anolyte compartment **401** of the electrolyser **400.** An anolyte pump may be used to pump the brine stream along a conduit from the anolyte tank to the anolyte compartment of the electrolyser.

### Apparatus for process involving use of forward osmosis

The present invention provides apparatus for the process described above involving forward osmosis to concentrate the lithium chloride brine prior to electrolysis.

Thus, the invention provides an apparatus for the processing of lithium chloride brine comprising:
(a) an electrolyser comprising an anolyte compartment, a catholyte compartment and an ion exchange membrane between the anolyte compartment and the catholyte compartment;
(b) a forward osmosis unit located upstream of the electrolyser, wherein the forward osmosis unit comprises a draw chamber, a feed chamber and a semi-permeable membrane between the draw chamber and the feed chamber, wherein the draw chamber and the feed chamber each comprise an inlet for receiving lithium chloride brine and an outlet for the outflow of lithium chloride brine;
(c) a means for supplying lithium chloride brine from the outlet of the feed chamber of the forward osmosis unit to the anolyte compartment of the electrolyser;
(d) an ion exchange column comprising an inlet, an outlet and an ion exchange resin for the removal of at least one impurity from the lithium chloride brine;
(e) a means for supplying lithium chloride brine from the outlet of the draw chamber to the ion exchange column; and
(f) a means for supplying lithium chloride brine from the outlet of the ion exchange column to the inlet of the feed chamber of the forward osmosis unit.

The "means" in each of components (c), (e) and (f) are each preferably a conduit for supplying the relevant liquid stream to the specified device. Said conduits may optionally each comprise a pump for pumping the liquid stream to the relevant device.

The apparatus may further comprise:
(g) a second ion exchange column comprising an inlet, an outlet and an ion exchange resin for the removal of at least one impurity from the lithium chloride brine;
(h) means for supplying lithium chloride brine from the outlet of the first ion exchange column to the inlet of the second ion exchange column; and
(i) means for supplying lithium chloride brine from the outlet of the second ion exchange column to the inlet of the feed chamber of the forward osmosis unit.

When the apparatus comprises two ion exchange columns, the apparatus is configured such that it comprises a means for supplying lithium chloride brine from the outlet of the draw chamber to the first ion exchange column **101,** a means for supplying the brine from the outlet of the first ion exchange column to the inlet of the second ion exchange column **102,** and a means for supplying the brine from the outlet of the second ion exchange column to the inlet of the feed chamber of the forward osmosis unit **200.** The apparatus may be configured to supply the brine directly from the outlet of the second ion exchange column to the inlet of the feed chamber of the forward osmosis unit, or may be configured to pass the brine through one or more additional purification steps prior to entering the feed chamber of the forward osmosis unit. The optional additional purification steps may comprise a third ion exchange step (e.g. for the removal of fluoride ions from the brine) and/or a step that removes silica from the brine. The removal of silica may be achieved, for example, by contacting the brine with iron oxide, wherein the iron oxide adsorbs the silica from the brine. The iron oxide is preferably in powder form and the brine is passed through an adsorber vessel containing the iron oxide powder. For this purpose, an iron oxide absorber such as a Bayoxide(R) iron oxide adsorber marketed by Lanxess may be used.

Preferably, the apparatus is configured such that it comprises a means for supplying lithium chloride brine from the outlet of the draw chamber to a vessel **100** in which impurity precipitation can take place by adding base to the brine, and a means for supplying brine from said vessel to the first ion exchange column. This is the configuration shown in Figures 2 and 3.

The apparatus may comprise an evaporator located between the forward osmosis unit and the anolyte compartment of the electrolyser, wherein the evaporator is configured to receive the concentrated feed solution from the output of the forward osmosis unit. The evaporator may be used to concentrate the brine further. As explained above, less energy will be needed to evaporate water using the evaporator if forward osmosis has been performed first, since forward osmosis will have concentrated the brine to a significant degree.

However, preferably, no evaporator is located upstream of the electrolyser. This means that the brine is not subjected to any evaporation process prior to first being electrolysed. One of the benefits of forward osmosis is that it may concentrate the brine sufficiently that no evaporator is needed to concentrate the anolyte product stream and the anolyte product stream can be mixed with the fresh, purified brine, which has not previously been electrolysed, without concentrating the anolyte product stream first, and still obtain a combined brine which is sufficiently concentrated for electrolysis.

"Upstream" of the electrolyser means a location that brine passes through before the brine is first electrolysed and does not encompass the depleted anolyte stream (anolyte product stream) that is recirculated to the electrolyser. In the event that the anolyte product stream is mixed with fresh purified brine (e.g. in an anolyte tank), the anolyte product stream may be subjected to evaporation (e.g. using a vacuum flash evaporator) prior to being mixed with the fresh purified brine, as described above, but this does not qualify as evaporation upstream of the electrolyser for the purpose of the present disclosure.

The apparatus may further comprise an anolyte tank **300** situated between the forward osmosis unit and the electrolyser, wherein the anolyte tank is fluidly connected to the forward osmosis unit, an inlet of the anolyte compartment of the electrolyser and an outlet of the anolyte compartment of the electrolyser. This means that the anolyte tank is configured such that the anolyte product stream and the fresh, purified brine may both flow into the anolyte tank and be mixed therein. The combined brine that is formed may then flow from the anolyte tank to the anolyte compartment of the electrolyser.

The apparatus may further comprise:
(i) a vacuum flash evaporator **601** fluidly connected to the anolyte compartment **401,** wherein the vacuum flash evaporator **601** is configured to receive the anolyte product formed in the electrolyser **400** and evaporate water from the anolyte product to form a concentrated anolyte product stream; and
(ii) means to recirculate the concentrated anolyte product stream from the vacuum flash evaporator **601** to the anolyte compartment **401** of the electrolyser **400.**

The vacuum flash evaporator **601** is preferably connected to the anolyte compartment of the electrolyser via a conduit which passes directly from the anolyte compartment to the vacuum flash evaporator, wherein said conduit is not connected to a source of any other liquid stream. The conduit preferably does not pass through any vessel between the anolyte compartment of the electrolyser and the vacuum flash evaporator. Preferably, no source of chemical reagents is connected to the conduit.

The apparatus may comprise an evaporator other than a vacuum flash evaporator, wherein said evaporator is fluidly connected to the anolyte compartment, wherein the evaporator is configured to receive the anolyte product formed in the electrolyser and evaporate water from the anolyte product to form a concentrated anolyte product stream. Alternatively, a mechanical vapour recompressor (MVR unit) may be used in the same location, instead of an evaporator.

If the apparatus comprises an evaporator (e.g. a vacuum flash evaporator) or mechanical vapour recompressor configured to receive the anolyte product formed in the electrolyser and evaporate water from the anolyte product to form a concentrated anolyte product stream, the anolyte tank **300** may be fluidly connected to the evaporator such that the anolyte tank is configured to receive the concentrated anolyte product stream and the fresh, purified brine that has been concentrated in the forward osmosis unit.

The apparatus may further comprise an anolyte tank **300** situated downstream of the evaporator (e.g. vacuum flash evaporator) or MVR unit, wherein the anolyte tank is fluidly connected to the evaporator (e.g. vacuum flash evaporator) or MVR unit and the anolyte compartment of the electrolyser.

The apparatus may comprise a pressure reduction valve **600** configured to reduce the pressure of the anolyte product stream after it has been removed from the electrolyser and before it enters the vacuum flash evaporator. This pressure reduction assists the evaporation of water in the vacuum flash evaporator. The pressure reduction valve may be configured to reduce the pressure of the anolyte product stream to a pressure in the range from about 1 kPa(a) to about 100 kPa(a), preferably in the range from about 1 kPa(a) to about 50 kPa(a), more preferably in the range from about 1 kPa(a) to about 20 kPa(a), wherein kPa(a) is the pressure in kPa relative to the pressure in a perfect vacuum at absolute zero (i.e. the true pressure value).

If the apparatus comprises an evaporator (e.g. a vacuum flash evaporator) or MVR unit configured to receive the anolyte product stream from the electrolyser, the apparatus preferably does not comprise any means of heating the anolyte product between the anolyte product exiting the electrolyser and entering the vacuum flash evaporator.

### EMBODIMENTS OF THE INVENTION

1. A method for the processing of a lithium chloride brine comprising:
   a) adding a base to the brine to increase the pH of the brine and cause precipitation of divalent impurities;
   b) performing at least one ion exchange process to remove at least one impurity from the brine, thereby forming a purified brine;
   c) feeding the purified brine to the anolyte compartment of an electrolyser;
   d) feeding a catholyte to the catholyte compartment of the electrolyser;
   e) electrolysing the anolyte and catholyte in the electrolyser, thereby forming a catholyte product comprising lithium hydroxide and an anolyte product comprising a more dilute lithium chloride brine than the brine that is fed into the anolyte compartment in step (c);
   f) removing the anolyte product from the electrolyser and supplying the anolyte product stream to a flash evaporator without mixing it with any other liquid stream between exiting the electrolyser and entering the flash evaporator;
   g) increasing the concentration of the anolyte product stream by vacuum evaporation in the flash evaporator to generate a concentrated anolyte product; and
   h) recirculating the concentrated anolyte product to the anolyte compartment of the electrolyser.
2. The method of embodiment 1, wherein step (g) comprises further increasing the concentration of the anolyte product using mechanical vapour recompression, prior to step (h).
3. The method of embodiment 1 or embodiment 2, wherein the anolyte product that is removed from the electrolyser in step (f) has a temperature in the range from about 50 °C to about 95 °C, preferably in the range from about 70 °C to about 95 °C.
4. The method of any one of embodiments 1-3, further comprising flowing the anolyte product stream through a pressure reduction valve to reduce its pressure, prior to supplying it to a flash evaporator.
5. The method of any one of embodiments 1-4, wherein step (g) increases the concentration of the anolyte product to a concentration of at least about 16% w/w LiCl, preferably in the range from about 16% w/w to about 24% w/w LiCl, more preferably in the range from about 16% w/w to about 20% w/w LiCl.
6. The method of any one of embodiments 1-5, wherein the pressure in the flash evaporator is less than 100 kPa, preferably less than 50 kPa and more preferably less than 20 kPa.
7. The method of any one of embodiments 1-6, wherein the base in step (a) is an alkali metal or alkaline earth metal salt.
8. The method of embodiment 7, wherein the base is selected from lithium hydroxide, lithium carbonate, sodium carbonate and calcium hydroxide.
9. The method of embodiment 8, wherein a portion of the catholyte product comprising lithium hydroxide is removed from the electrolyser and used as the base.
10. The method of any one of embodiments 1-9, wherein the at least one ion exchange process removes impurities selected from divalent impurities, boron, silica, fluoride or a combination thereof.
11. The method of any one of embodiments 1-9, wherein step (b) comprises subjecting the brine to an ion exchange process to remove divalent impurities and to an ion exchange process to remove boron.
12. The method of any one of embodiments 1-11, wherein no additional heat is supplied to the anolyte product stream prior to step (g) in addition to the heat generated in the electrolyser; preferably wherein no additional heat is supplied to the anolyte product stream prior to and during step (g) in addition to the heat generated in the electrolyser.
13. The method of any one of embodiments 1-12, further comprising concentrating the purified brine formed in step (b) prior to feeding it to the anolyte compartment of an electrolyser, preferably wherein the purified brine is concentrated using an evaporator.
14. The method of any one of the preceding embodiments, wherein the anolyte product stream passes along a conduit from the anolyte compartment of the electrolyser to the flash evaporator without passing through any other vessel, preferably wherein no chemical reagents are added to the anolyte product stream between leaving the anolyte compartment of the electrolyser and entering the vacuum flash evaporator.
15. The method of any one of embodiments 1-14, wherein the concentrated anolyte product stream that is formed in step (g) is mixed with a fresh brine input stream prior to step (h), preferably wherein the mixing takes place in an anolyte tank.
16. A method for the processing of a lithium chloride brine comprising:
   a) providing a lithium chloride brine having a concentration of at least about 20% w/w LiCl;
   b) diluting a first portion of said brine to provide a brine having a concentration of about 14% w/w or less LiCl;
   c) subjecting the diluted brine obtained from step (b) to at least one ion exchange process, thereby removing at least one impurity from the brine;
   d) performing a first forward osmosis step, wherein the brine obtained from step (c) is the feed solution and a second portion of the brine provided in step (a) is the draw solution, thereby concentrating the feed solution to obtain a purified brine having a concentration of at least about 15% w/w LiCl and diluting the draw solution to form a diluted draw solution;
   e) feeding the purified brine having a concentration of at least about 15% w/w LiCI obtained from step (d) to the anolyte compartment of an electrolyser;
   f) feeding a catholyte to the catholyte compartment of the electrolyser;
   g) electrolysing the anolyte and catholyte supplied in steps (e) and (f) in the electrolyser, thereby forming a catholyte product comprising lithium hydroxide and an anolyte product comprising a more dilute lithium chloride brine than the brine that is fed into the anolyte compartment in step (e);
   h) subjecting the diluted draw solution obtained in step (d) to at least one ion exchange process, thereby removing at least one impurity from the diluted draw solution;
   i) performing a second forward osmosis step, wherein the brine obtained from step (h) is the feed solution and a lithium chloride brine having a concentration of at least about 20% w/w LiCl is the draw solution, thereby concentrating the feed solution to obtain a purified brine having a concentration of at least about 15% w/w LiCl;
   j) feeding the purified brine having a concentration of at least about 15% w/w LiCl obtained from step (i) to the anolyte compartment of an electrolyser;
   k) feeding a catholyte to the catholyte compartment of the electrolyser; and
   l) electrolysing the anolyte and catholyte supplied in steps (j) and (k) in the electrolyser, thereby forming a catholyte product comprising lithium hydroxide and an anolyte product comprising a more dilute lithium chloride brine than the brine that is fed into the anolyte compartment in step (j).
17. The method of embodiment 16, wherein the lithium chloride brine having a concentration of at least about 20% w/w LiCl that is used as the draw solution in step (i) is a third portion of the brine provided in step (a).
18. The method of embodiment 16 or embodiment 17, wherein step (h) further comprises adding to the diluted draw solution formed during forward osmosis in step (d) either water or a lithium chloride brine that contains a lower concentration of lithium chloride than the diluted draw solution obtained from forward osmosis in step (d), thereby forming a lithium chloride brine having a concentration of about 14% w/w or less LiCl, preferably about 12% w/w or less LiCl, more preferably in the range from about 1% w/w to about 10% w/w LiCl, prior to performing the at least one ion exchange process.
19. The method of any one of embodiments 16-18, wherein the process does not comprise performing a nanofiltration step that removes divalents from the brine prior to electrolysis step (g) and does not comprise performing a nanofiltration step that removes divalents from the brine prior to electrolysis step (1).
20. The method of any one of embodiments 16-19, wherein the at least one impurity removed in each of the ion exchange processes in steps (c) and (h) is selected from divalent impurities and boron.
21. The method of embodiment 20, wherein each of steps (c) and (h) comprises subjecting the brine to an ion exchange process to remove divalent impurities and to an ion exchange process to remove boron.
22. The method of any one of embodiments 16-21, wherein each of step (c) and step (h) reduces the level of divalent impurities in the brine to less than about 1 ppm, preferably less than about 0.1 ppm.
23. The method of any one of embodiments 16-22, wherein each of step (c) and step (h) reduces the level of boron in the brine to less than about 1 ppm, preferably less than about 0.1 ppm.
24. The method of any one of embodiments 16-23, wherein step (b) comprises diluting a first portion of the lithium chloride brine to a concentration of about 12% w/w or less LiCl, preferably in the range from about 1% w/w to about 10% w/w LiCl, more preferably in the range from about 5% w/w to about 10% w/w LiCl, most preferably in the range from about 8% w/w to about 10% w/w LiCl.
25. The method of any one of embodiments 16-24, wherein the first forward osmosis step and the second forward osmosis step each concentrates the feed solution to a concentration of at least about 16% w/w LiCl, preferably in the range from about 16% w/w to about 24% w/w LiCl, more preferably in the range from about 16% w/w to about 20% w/w LiCl.
26. The method of any one of embodiments 16-25, wherein the lithium chloride brine provided in step (a) has a concentration of at least about 25% w/w LiCl, preferably in the range from about 25% w/w to about 35% w/w LiCl.
27. The method of any one of embodiments 16-26, wherein no evaporator is used to concentrate the brine prior to electrolysis.
28. The method of any one of embodiments 16-27, wherein the anolyte product formed during electrolysis is removed from the electrolyser and is mixed with the purified brine having a concentration of at least 15% w/w LiCl that is formed in step (d) and step (i), therebyforming a combined brine stream that is fed into the anolyte compartment of the electrolyser, preferably wherein the combined brine stream is not concentrated prior to entering the anolyte compartment of the electrolyser.
29. The method of any one of embodiments 16-27, wherein the process further comprises:
   m) removing the anolyte product from the electrolyser in step (g) and step (l) and supplying it to a flash evaporator;
   n) increasing the concentration of the anolyte product stream by vacuum evaporation in the flash evaporator to generate a concentrated anolyte product; and
   o) recirculating the concentrated anolyte product to the anolyte compartment of the electrolyser.
30. The method of embodiment 29, wherein the anolyte product stream is supplied to the flash evaporator without mixing it with any other liquid stream between exiting the electrolyser and entering the flash evaporator.
31. The method of embodiment 29 or embodiment 30, wherein no additional heat is supplied to the anolyte product stream prior to step (n) in addition to the heat generated in the electrolyser; preferably wherein no additional heat is supplied to the anolyte product stream prior to and during step (n) in addition to the heat generated in the electrolyser.
32. The method of any one of embodiments 29-31, wherein the process does not comprise further increasing the concentration of the anolyte product removed from the electrolyser using mechanical vapour recompression.
33. The method of any preceding embodiment, comprising preparing the lithium chloride brine by reacting lithium carbonate with hydrochloric acid.
34. The method of any preceding embodiment, wherein the catholyte fed into the catholyte compartment of the electrolyser comprises LiOH in water, preferably 1-7% w/w LiOH in water.
35. The method of any preceding embodiment, comprising removing the catholyte product from the electrolyser and obtaining solid lithium hydroxide by crystallisation.
36. The method of any preceding embodiment, comprising adding carbon dioxide to a portion of the catholyte product to form lithium carbonate.
37. An apparatus for the processing of lithium chloride brine comprising:
   (a) an electrolyser comprising an anolyte compartment, a catholyte compartment and an ion exchange membrane between the anolyte compartment and the catholyte compartment;
   (b) an ion exchange column adapted to remove at least one impurity from a lithium chloride brine;
   (c) means for feeding a lithium chloride brine from the ion exchange column to the anolyte compartment;
   (d) means for feeding a solution comprising lithium hydroxide and water to the catholyte compartment;
   (e) a vacuum flash evaporator fluidly connected to the anolyte compartment, wherein the vacuum flash evaporator is configured to receive the anolyte product formed in the electrolyser and evaporate water from the anolyte product to form a concentrated anolyte product stream, wherein the vacuum flash evaporator is connected directly to the anolyte compartment of the evaporator such that no other stream can be mixed with the anolyte product stream between the anolyte product stream exiting the electrolyser and entering the flash evaporator; and
   (f) means to recirculate the concentrated anolyte product stream from the vacuum flash evaporator to the anolyte compartment of the electrolyser.
38. An apparatus according to embodiment 37, further comprising an anolyte tank situated downstream of the vacuum flash evaporator, wherein the anolyte tank is fluidly connected to the vacuum flash evaporator, ion exchange column and the anolyte compartment of the electrolyser.
39. An apparatus according to any one of embodiments 37-38, further comprising a pressure reduction valve located between the anolyte compartment of the electrolyser and the vacuum flash evaporator for reducing the pressure of the anolyte product received from the anolyte compartment of the electrolyser before it reaches the vacuum flash evaporator.
40. An apparatus according to any one of embodiments 37-39, wherein the apparatus does not comprise any means of heating the anolyte product between the anolyte product exiting the electrolyser and entering the vacuum flash evaporator.
41. An apparatus according to any one of embodiments 37-40, further comprising an evaporator located downstream of the ion exchange column and upstream of the electrolyser, wherein the evaporator is configured to concentrate the brine received from the ion exchange column.
42. An apparatus according to any one of embodiments 37-40, further comprising a forward osmosis unit located downstream of the ion exchange column and upstream of the electrolyser, wherein the forward osmosis unit comprises a draw chamber, a feed chamber and a semi-permeable membrane between the draw chamber and the feed chamber, wherein the draw chamber and the feed chamber each comprise an inlet for receiving lithium chloride brine and an outlet for the outflow of lithium chloride brine, and wherein the apparatus comprises means for supplying the lithium chloride brine that flows out of the outlet of the feed chamber to the anolyte compartment of the electrolyser.
43. An apparatus according to embodiment 42, comprising means for supplying the lithium chloride brine that flows out of the outlet of the feed chamber to an anolyte tank situated downstream of the vacuum flash evaporator, wherein the anolyte tank is fluidly connected to the vacuum flash evaporator and the anolyte compartment of the electrolyser.
44. An apparatus for the processing of lithium chloride brine comprising:
   (a) an electrolyser comprising an anolyte compartment, a catholyte compartment and an ion exchange membrane between the anolyte compartment and the catholyte compartment;
   (b) a forward osmosis unit located upstream of the electrolyser, wherein the forward osmosis unit comprises a draw chamber, a feed chamber and a semi-permeable membrane between the draw chamber and the feed chamber, wherein the draw chamber and the feed chamber each comprise an inlet for receiving lithium chloride brine and an outlet for the outflow of lithium chloride brine;
   (c) a means for supplying lithium chloride brine from the outlet of the feed chamber of the forward osmosis unit to the anolyte compartment of the electrolyser;
   (d) an ion exchange column comprising an inlet, an outlet and an ion exchange resin for the removal of at least one impurity from the lithium chloride brine;
   (e) a means for supplying lithium chloride brine from the outlet of the draw chamber to the inlet of the ion exchange column; and
   (f) a means for supplying lithium chloride brine from the outlet of the ion exchange column to the inlet of the feed chamber of the forward osmosis unit.
45. An apparatus according to embodiment 44, further comprising
   (g) a second ion exchange column comprising an inlet, an outlet and an ion exchange resin for the removal of at least one impurity from the lithium chloride brine;
   (h) means for supplying lithium chloride brine from the outlet of the first ion exchange column to the inlet of the second ion exchange column; and
   (i) means for supplying lithium chloride brine from the outlet of the second ion exchange column to the inlet of the feed chamber of the forward osmosis unit.
46. An apparatus according to embodiment 44 or embodiment 45, further comprising an anolyte tank situated between the forward osmosis unit and the electrolyser, wherein the anolyte tank is fluidly connected to the forward osmosis unit, an inlet of the anolyte compartment of the electrolyser and an outlet of the anolyte compartment of the electrolyser.
47. An apparatus according to any one of embodiments 44-46, wherein the apparatus further comprises:
   (i) a vacuum flash evaporator fluidly connected to the anolyte compartment, wherein the vacuum flash evaporator is configured to receive the anolyte product formed in the electrolyser and evaporate water from the anolyte product to form a concentrated anolyte product stream; and
   (ii) means to recirculate the concentrated anolyte product stream from the vacuum flash evaporator to the anolyte compartment of the electrolyser.
48. An apparatus according to embodiment 47, wherein the inlet of the vacuum flash evaporator is connected directly to the anolyte compartment of the evaporator such that no other liquid stream can be mixed with the anolyte product stream between the anolyte product stream exiting the electrolyser and entering the flash evaporator.
49. An apparatus according to embodiment 47 or embodiment 48, comprising an anolyte tank that is fluidly connected to the forward osmosis unit, the vacuum flash evaporator and an inlet of the anolyte compartment of the electrolyser.
50. An apparatus according to any one of embodiments 47-49, further comprising a pressure reduction valve located between the anolyte compartment and the inlet of the vacuum flash evaporator for reducing the pressure of the anolyte product received from the anolyte compartment of the electrolyser before it reaches the vacuum flash evaporator.
51. An apparatus according to any one of embodiments 47-50, wherein the apparatus does not comprise any means of heating the anolyte product between the anolyte product exiting the electrolyser and entering the vacuum flash evaporator.

The invention has been described in detail above, including preferred features thereof. However, the invention is only limited by the appended claims and those skilled in the art will appreciate that modifications may be made to the methods and apparatus described above whilst remaining within the scope of the appended claims.

## Claims

1. A method for the processing of a lithium chloride brine comprising:
a) adding a base to the brine to increase the pH of the brine and cause precipitation of divalent impurities;
b) performing at least one ion exchange process to remove at least one impurity from the brine, thereby forming a purified brine;
c) feeding the purified brine to the anolyte compartment of an electrolyser;
d) feeding a catholyte to the catholyte compartment of the electrolyser;
e) electrolysing the anolyte and catholyte in the electrolyser, thereby forming a catholyte product comprising lithium hydroxide and an anolyte product comprising a more dilute lithium chloride brine than the brine that is fed into the anolyte compartment in step (c);
f) removing the anolyte product from the electrolyser and supplying the anolyte product stream to a flash evaporator without mixing it with any other liquid stream between exiting the electrolyser and entering the flash evaporator;
g) increasing the concentration of the anolyte product stream by vacuum evaporation in the flash evaporator to generate a concentrated anolyte product; and
h) recirculating the concentrated anolyte product to the anolyte compartment of the electrolyser.

2. The method of claim 1, wherein no additional heat is supplied to the anolyte product stream prior to step (g) in addition to the heat generated in the electrolyser; preferably wherein no additional heat is supplied to the anolyte product stream prior to and during step (g) in addition to the heat generated in the electrolyser.

3. The method of claim 1 or claim 2, wherein the anolyte product stream passes along a conduit from the anolyte compartment of the electrolyser to the flash evaporator without passing through any other vessel, preferably wherein no chemical reagents are added to the anolyte product stream between leaving the anolyte compartment of the electrolyser and entering the vacuum flash evaporator.

4. The method of any one of claims 1-3, wherein the concentrated anolyte product stream that is formed in step (g) is mixed with a fresh brine input stream prior to step (h), preferably wherein the mixing takes place in an anolyte tank.

5. An apparatus for the processing of lithium chloride brine comprising:
(a) an electrolyser comprising an anolyte compartment, a catholyte compartment and an ion exchange membrane between the anolyte compartment and the catholyte compartment;
(b) an ion exchange column adapted to remove at least one impurity from a lithium chloride brine;
(c) means for feeding a lithium chloride brine from the ion exchange column to the anolyte compartment;
(d) means for feeding a solution comprising lithium hydroxide and water to the catholyte compartment;
(e) a vacuum flash evaporator fluidly connected to the anolyte compartment, wherein the vacuum flash evaporator is configured to receive the anolyte product formed in the electrolyser and evaporate water from the anolyte product to form a concentrated anolyte product stream, wherein the vacuum flash evaporator is connected directly to the anolyte compartment of the evaporator such that no other stream can be mixed with the anolyte product stream between the anolyte product stream exiting the electrolyser and entering the flash evaporator; and
(f) means to recirculate the concentrated anolyte product stream from the vacuum flash evaporator to the anolyte compartment of the electrolyser.

6. An apparatus according to claim 5, wherein the apparatus does not comprise any means of heating the anolyte product between the anolyte product exiting the electrolyser and entering the vacuum flash evaporator.

7. A method for the processing of a lithium chloride brine comprising:
a) providing a lithium chloride brine having a concentration of at least about 20% w/w LiCl;
b) diluting a first portion of said brine to provide a brine having a concentration of about 14% w/w or less LiCl;
c) subjecting the diluted brine obtained from step (b) to at least one ion exchange process, thereby removing at least one impurity from the brine;
d) performing a first forward osmosis step, wherein the brine obtained from step (c) is the feed solution and a second portion of the brine provided in step (a) is the draw solution, thereby concentrating the feed solution to obtain a purified brine having a concentration of at least about 15% w/w LiCl and diluting the draw solution to form a diluted draw solution;
e) feeding the purified brine having a concentration of at least about 15% w/w LiCI obtained from step (d) to the anolyte compartment of an electrolyser;
f) feeding a catholyte to the catholyte compartment of the electrolyser;
g) electrolysing the anolyte and catholyte supplied in steps (e) and (f) in the electrolyser, thereby forming a catholyte product comprising lithium hydroxide and an anolyte product comprising a more dilute lithium chloride brine than the brine that is fed into the anolyte compartment in step (e);
h) subjecting the diluted draw solution obtained in step (d) to at least one ion exchange process, thereby removing at least one impurity from the diluted draw solution;
i) performing a second forward osmosis step, wherein the brine obtained from step (h) is the feed solution and a lithium chloride brine having a concentration of at least about 20% w/w LiCl is the draw solution, thereby concentrating the feed solution to obtain a purified brine having a concentration of at least about 15% w/w LiCl;
j) feeding the purified brine having a concentration of at least about 15% w/w LiCl obtained from step (i) to the anolyte compartment of an electrolyser;
k) feeding a catholyte to the catholyte compartment of the electrolyser; and
l) electrolysing the anolyte and catholyte supplied in steps (j) and (k) in the electrolyser, thereby forming a catholyte product comprising lithium hydroxide and an anolyte product comprising a more dilute lithium chloride brine than the brine that is fed into the anolyte compartment in step (j).

8. The method of claim 7, wherein the lithium chloride brine having a concentration of at least about 20% w/w LiCl that is used as the draw solution in step (i) is a third portion of the brine provided in step (a).

9. The method of claim 7 or claim 8, wherein no evaporator is used to concentrate the brine prior to electrolysis.

10. The method of any one of claims 7-9, wherein the anolyte product formed during electrolysis is removed from the electrolyser and is mixed with the purified brine having a concentration of at least 15% w/w LiCl that is formed in step (d) and step (i), thereby forming a combined brine stream that is fed into the anolyte compartment of the electrolyser, preferably wherein the combined brine stream is not concentrated prior to entering the anolyte compartment of the electrolyser.

11. The method of any one of claims 7-10, wherein the process further comprises:
m) removing the anolyte product from the electrolyser in step (g) and step (l) and supplying it to a flash evaporator;
n) increasing the concentration of the anolyte product stream by vacuum evaporation in the flash evaporator to generate a concentrated anolyte product; and
o) recirculating the concentrated anolyte product to the anolyte compartment of the electrolyser.

12. The method of claim 11, wherein the anolyte product stream is supplied to the flash evaporator without mixing it with any other liquid stream between exiting the electrolyser and entering the flash evaporator.

13. The method of claim 11 or claim 12, wherein no additional heat is supplied to the anolyte product stream prior to step (n) in addition to the heat generated in the electrolyser; preferably wherein no additional heat is supplied to the anolyte product stream prior to and during step (n) in addition to the heat generated in the electrolyser.

14. An apparatus for the processing of lithium chloride brine comprising:
(a) an electrolyser comprising an anolyte compartment, a catholyte compartment and an ion exchange membrane between the anolyte compartment and the catholyte compartment;
(b) a forward osmosis unit located upstream of the electrolyser, wherein the forward osmosis unit comprises a draw chamber, a feed chamber and a semi-permeable membrane between the draw chamber and the feed chamber, wherein the draw chamber and the feed chamber each comprise an inlet for receiving lithium chloride brine and an outlet for the outflow of lithium chloride brine;
(c) a means for supplying lithium chloride brine from the outlet of the feed chamber of the forward osmosis unit to the anolyte compartment of the electrolyser;
(d) an ion exchange column comprising an inlet, an outlet and an ion exchange resin for the removal of at least one impurity from the lithium chloride brine;
(e) a means for supplying lithium chloride brine from the outlet of the draw chamber to the inlet of the ion exchange column; and
(f) a means for supplying lithium chloride brine from the outlet of the ion exchange column to the inlet of the feed chamber of the forward osmosis unit.

15. An apparatus according to claim 14, wherein the apparatus further comprises:
(i) a vacuum flash evaporator fluidly connected to the anolyte compartment, wherein the vacuum flash evaporator is configured to receive the anolyte product formed in the electrolyser and evaporate water from the anolyte product to form a concentrated anolyte product stream; and
(ii) means to recirculate the concentrated anolyte product stream from the vacuum flash evaporator to the anolyte compartment of the electrolyser.
